# EUROPEAN PATENT APPLICATION

(11) **EP 4 412 364 A1**
(43) Date of publication of application: **07.08.2024**
(21) Application number: 22885551.6
(22) Date of filing: 26.09.2022
(51) Int. Cl.: H04W 72/04

(54) **COMMUNICATION METHOD AND APPARATUS**

(30) Priority: 26.10.2021 CN 202111249412
(71) Applicant: Huawei Technologies Co., Ltd., Shenzhen, Guangdong 518129 (CN)
(72) Inventor: CHEN, Ying, Shenzhen, Guangdong 518129 (CN); ZHOU, Jianwei, Shenzhen, Guangdong 518129 (CN); LI, Rong, Shenzhen, Guangdong 518129 (CN); WANG, Jun, Shenzhen, Guangdong 518129 (CN)
(74) Representative: Goddar, Heinz J.
(86) International application number: PCT/CN2022/121459
(87) International publication number: WO 2023/071664

(57) **Abstract**

This application provides a communication method and apparatus, and relates to the field of wireless communication technologies, to flexibly configure a bandwidth for a terminal device, and adapt to a service change on a terminal device side. The method includes: The terminal device receives first information from an access network device. The first information indicates that at least two frequency resources in a plurality of frequency resources are activated, and the plurality of frequency resources are preconfigured. Then, the terminal device performs a data transmission with the access network device on a first frequency resource. The at least two frequency resources indicated by the first information include the first frequency resource.

## Description

This application claims priority to Chinese Patent Application No. 202111249412.5, filed with the China National Intellectual Property Administration on October 26, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

A bandwidth part (bandwidth part, BWP) is a segment of bandwidth resources configured by an access network device for a terminal device. For a terminal device in a connected state, a maximum of four dedicated bandwidth parts (dedicated bandwidth part, Dedicated BWP) are configured for one cell.

However, when the terminal device works in one cell, only one uplink BWP and one downlink BWP are used for data exchange. In a case of BWP switching, the terminal device performs switching between a maximum of four dedicated BWPs. In addition, only one uplink BWP and one downlink BWP of the terminal device are activated at a moment. Consequently, the access network device cannot flexibly configure a bandwidth for the terminal device, and cannot adapt to a service change on the terminal device side, and data transmission efficiency is low.

### SUMMARY

This application provides a communication method and apparatus, to flexibly configure a bandwidth for a terminal device, adapt to a service change on a terminal device side, and improve data transmission efficiency.

To achieve the foregoing objectives, the following technical solutions are used in embodiments of this application.

According to a first aspect, an embodiment of this application provides a communication method. The method may be performed by a terminal device, or may be performed by a chip used in the terminal device. An example in which the method is performed by the terminal device is used below for description. The method includes: The terminal device receives first information from an access network device. The first information indicates that at least two frequency resources in a plurality of frequency resources are activated, and the plurality of frequency resources are preconfigured. The terminal device performs a data transmission with the access network device on a first frequency resource. The at least two frequency resources indicated by the first information include the first frequency resource.

In this way, even if the terminal device performs frequency resource switching at a moment, more frequency resources, that is, at least two frequency resources, are activated. Therefore, the access network device may select, from the at least two frequency resources, a frequency resource used for a data transmission, so as to configure bandwidths of more values for the terminal device, thereby improving bandwidth configuration flexibility, better adapting to a service change on a terminal device side, and improving data transmission efficiency.

In a possible design, the communication method in this embodiment of this application further includes: The terminal device receives configuration information from the access network device by using a first beam. The first beam corresponds to a first resource group, the plurality of frequency resources belong to the first resource group, and the configuration information indicates a frequency resource configuration of the first resource group. In other words, configuration information of different resource groups is transmitted by using different beams, and configuration information of the first resource group is transmitted by using the first beam.

In a possible design, that the first beam corresponds to a first resource group includes: A first index corresponds to the first resource group, and the first index identifies the first beam. In other words, there is a correspondence between different beam indexes and different resource groups, and the first resource group corresponds to the first index.

In a possible design, the communication method in this embodiment of this application further includes: The terminal device receives configuration information from the access network device. The configuration information indicates a first index, the first index corresponds to a first resource group, the plurality of frequency resources belong to the first resource group, and the configuration information indicates a frequency resource configuration of the first resource group.

In other words, there is a correspondence between different beam indexes and different resource groups. The configuration information indicates the frequency resource configuration of the first resource group by using the first index.

In a possible design, the first index includes one of the following: an index of a synchronization signal block SSB or an index of a channel state information-reference signal CSI-RS.

In a possible design, the first information is carried in one of the following: radio resource control RRC signaling, downlink control information DCI, or a media access control control element MAC CE.

In a possible design, the communication method in this embodiment of this application further includes: The terminal device receives second information from the access network device. The second information indicates candidate frequency resources, a quantity of candidate frequency resources is determined based on a capability of the terminal device, and the first information indicates that at least two frequency resources in the candidate frequency resources are activated.

In other words, the access network device first determines a specific quantity of candidate frequency resources based on the capability of the terminal device, to prevent the quantity of candidate frequency resources from exceeding a capability range of the terminal device.

In a possible design, the communication method in this embodiment of this application further includes: When running of a timer expires, the terminal device switches to a default frequency resource. Effective duration of the timer indicates duration in which a frequency resource in the frequency resources indicated by the first information is in an activated state, and the plurality of frequency resources include the default frequency resource.

In other words, if any one of the at least two frequency resources indicated by the first information is in an activated state, the timer keeps timing until running of the timer expires, to indicate the terminal device to switch to the default frequency resource.

In a possible design, there is one timer. In other words, one timer is used for timing for the at least two activated frequency resources.

In a possible design, a quantity of timers and a quantity of frequency resources indicated by the first information are consistent and are in one-to-one correspondence, effective duration of each timer indicates duration in which a corresponding frequency resource is in an activated state, and that running of a timer expires includes: running of each timer expires.

In other words, different timers are used for timing for different frequency resources in the at least two activated frequency resources.

In a possible design, the communication method in this embodiment of this application further includes: The terminal device receives timer information from the access network device on a primary frequency resource. The timer information indicates to trigger the timer, and the frequency resources indicated by the first information include the primary frequency resource.

In other words, the timer information may be transmitted by using the primary frequency resource, to configure the timer.

In a possible design, the communication method in this embodiment of this application further includes: The terminal device receives third information from the access network device. The third information indicates a deactivated frequency resource, and the frequency resource indicated by the third information is at least one of the frequency resources indicated by the first information.

In other words, in the at least two activated frequency resources, the access network device may further indicate a frequency resource to be deactivated, so that the access network device flexibly configures a frequency resource status.

In a possible design, the communication method in this embodiment of this application further includes: The terminal device receives switching information from the access network device. The switching information indicates that at least two frequency resources in a second resource group are activated. The terminal device switches from all frequency resources to the frequency resources indicated by the switching information. All the frequency resources are all of the frequency resources indicated by the first information.

In other words, all of the activated frequency resources are switched, that is, are switched from one resource group to another resource group.

In a possible design, the switching information further indicates at least one of the following: resource group switching or beam switching.

In a possible design, the communication method in this embodiment of this application further includes: The terminal device receives switching information from the access network device. The switching information indicates that at least one frequency resource in a second resource group is activated. The terminal device switches from some frequency resources to the frequency resource indicated by the switching information. The some frequency resources are some of the frequency resources indicated by the first information.

In other words, some frequency resources in the activated frequency resources are switched, that is, the activated frequency resources are distributed in at least two resource groups.

In a possible design, the some frequency resources include the primary frequency resource and/or a secondary frequency resource. In other words, a frequency resource that undergoes switching may be a primary frequency resource, or may be a secondary frequency resource, or may be a primary frequency resource and a secondary frequency resource.

In a possible design, the communication method in this embodiment of this application further includes: The terminal device receives indication information from the access network device. The indication information indicates at least one of the following: a primary frequency resource in the second resource group; a secondary frequency resource in the second resource group; and a frequency offset. The frequency offset indicates a frequency offset between the second resource group and the first resource group, and the first resource group includes the at least two resources indicated by the first information, to indicate a configuration status of the second resource group.

In a possible design, the switching information indicates a second index. The second index corresponds to the second resource group. In other words, there is a correspondence between different indexes and different resource groups. The switching information indicates, by using the second index, a frequency resource group to which the terminal device is to switch.

In a possible design, the first information is transmitted by using the primary frequency resource. The plurality of frequency resources include the primary frequency resource, and the at least two frequency resources indicated by the first information belong to secondary frequency resources. In other words, the primary frequency resource may configure a status of another secondary frequency resource.

In a possible design, the first information includes a bit sequence, and a value of a first bit in the bit sequence is different from a value of another bit in the bit sequence. Bits in the bit sequence one-to-one correspond to frequency resources in the plurality of frequency resources, and the first bit corresponds to the at least two frequency resources indicated by the first information.

In a possible design, the first information includes frequency resource indexes, and the frequency resource indexes identify the at least two frequency resources indicated by the first information.

In a possible design, the communication method in this embodiment of this application further includes: The terminal device receives scheduling information from the access network device on the primary frequency resource. The scheduling information indicates a location of a data transmission resource, the data transmission resource is distributed on each frequency resource indicated by the first information, and the frequency resources indicated by the first information include the primary frequency resource.

In other words, the primary frequency resource can implement data scheduling of the primary frequency resource and another secondary frequency resource.

In a possible design, the communication method in this embodiment of this application further includes: The terminal device sends feedback information to the access network device on the primary frequency resource. The feedback information indicates transmission statuses of the data transmission resource in a same codebook. Alternatively, the feedback information includes first feedback information and second feedback information, the first feedback information indicates a transmission status of the data transmission resource on a third frequency resource in a first codebook, the second feedback information indicates a transmission status of the data transmission resource on a fourth frequency resource in a second codebook, the first feedback information and the second feedback information are transmitted by using different transmission resources, and the first frequency resource includes the third frequency resource and the fourth frequency resource.

In other words, the terminal device may provide the feedback information for the access network device in a single-codebook feedback manner, or may provide the feedback information for the access network device in a multi-codebook feedback manner.

In a possible design, the first feedback information further indicates a transmission status of the data transmission resource on a fifth frequency resource in the first codebook. The first frequency resource further includes the fifth frequency resource. A time difference between data transmissions respectively performed on the fifth frequency resource and the third frequency resource is less than a first threshold, a time difference between data transmissions respectively performed on the fourth frequency resource and the third frequency resource is greater than or equal to the first threshold, and a time difference between data transmissions respectively performed on the fourth frequency resource and the fifth frequency resource is greater than or equal to the first threshold.

In other words, transmission statuses on at least two frequency resources may be indicated in a same codebook, and a time difference between data transmissions performed on two frequency resources in the same codebook is less than the first threshold.

In a possible design, the communication method in this embodiment of this application further includes: The terminal device receives first scheduling information from the access network device on a third frequency resource. The first scheduling information indicates a location of a data transmission resource on the third frequency resource, and the first frequency resource includes the third frequency resource. The terminal device receives second scheduling information from the access network device on a fourth frequency resource. The second scheduling information indicates a location of the data transmission resource on the fourth frequency resource, and the first frequency resource includes the fourth frequency resource.

In other words, scheduling information of different frequency resources are transmitted on the frequency resources.

In a possible design, the communication method in this embodiment of this application further includes: The terminal device sends first feedback information to the access network device on the third frequency resource. The first feedback information indicates a transmission status of the data transmission resource on the third frequency resource. The terminal device sends second feedback information to the access network device on the fourth frequency resource. The second feedback information indicates a transmission status of the data transmission resource on the fourth frequency resource.

In other words, feedback information of the frequency resource is transmitted on different frequency resources.

In a possible design, the communication method in this embodiment of this application further includes: The terminal device receives fourth information from the access network device. The fourth information indicates a feedback manner, and the feedback manner is used to feed back a transmission status of the data transmission resource, to implement a flexible configuration of the feedback manner.

According to a second aspect, an embodiment of this application provides a communication method. The method may be performed by an access network device, or may be performed by a chip used in the access network device. An example in which the method is performed by the access network device is used below for description. The method includes: The access network device sends first information to a terminal device. The first information indicates that at least two frequency resources in a plurality of frequency resources are activated, and the plurality of frequency resources are preconfigured. The access network device performs a data transmission with the terminal device on a first frequency resource. The at least two frequency resources indicated by the first information include the first frequency resource.

In a possible design, the communication method in this embodiment of this application further includes: The access network device sends configuration information to the terminal device by using a first beam. The first beam corresponds to a first resource group, the plurality of frequency resources belong to the first resource group, and the configuration information indicates a frequency resource configuration of the first resource group.

In a possible design, that the first beam corresponds to a first resource group includes: A first index corresponds to the first resource group, and the first index identifies the first beam.

In a possible design, the communication method in this embodiment of this application further includes: The access network device sends configuration information to the terminal device. The configuration information indicates a first index, the first index corresponds to a first resource group, the plurality of frequency resources belong to the first resource group, and the configuration information indicates a frequency resource configuration of the first resource group.

In a possible design, the first index includes one of the following: an index of a synchronization signal block SSB or an index of a channel state information-reference signal CSI-RS.

In a possible design, the first information is carried in one of the following: radio resource control RRC signaling, downlink control information DCI, or a media access control control element MAC CE.

In a possible design, the communication method in this embodiment of this application further includes: The access network device sends second information to the terminal device. The second information indicates candidate frequency resources, a quantity of candidate frequency resources is determined based on a capability of the terminal device, and the first information indicates that at least two frequency resources in the candidate frequency resources are activated.

In a possible design, the communication method in this embodiment of this application further includes: The access network device sends timer information to the terminal device on a primary frequency resource. The timer information indicates to trigger a timer, the frequency resources indicated by the first information include the primary frequency resource, and effective duration of the timer indicates duration in which a frequency resource in the frequency resources indicated by the first information is in an activated state.

In a possible design, there is one timer.

In a possible design, a quantity of timers and a quantity of frequency resources indicated by the first information are consistent and are in one-to-one correspondence, and effective duration of each timer indicates duration in which a corresponding frequency resource is in an activated state.

In a possible design, the communication method in this embodiment of this application further includes: The access network device sends third information to the terminal device. The third information indicates a deactivated frequency resource, and the frequency resource indicated by the third information is at least one of the frequency resources indicated by the first information.

In a possible design, the communication method in this embodiment of this application further includes: The access network device sends switching information to the terminal device. The switching information indicates that at least two frequency resources in a second resource group are activated.

In a possible design, the switching information further indicates at least one of the following: resource group switching or beam switching.

In a possible design, the communication method in this embodiment of this application further includes: The access network device sends switching information to the terminal device. The switching information indicates that at least one frequency resource in a second resource group is activated.

In a possible design, the some frequency resources include the primary frequency resource and/or a secondary frequency resource.

In a possible design, the communication method in this embodiment of this application further includes: The access network device sends indication information to the terminal device. The indication information indicates at least one of the following: a primary frequency resource in the second resource group; a secondary frequency resource in the second resource group; and a frequency offset. The frequency offset indicates a frequency offset between the second resource group and the first resource group, and the first resource group includes the at least two resources indicated by the first information.

In a possible design, the switching information indicates a second index. The second index corresponds to the second resource group.

In a possible design, the first information is transmitted by using the primary frequency resource. The plurality of frequency resources include the primary frequency resource, and the at least two frequency resources indicated by the first information belong to secondary frequency resources.

In a possible design, the first information includes a bit sequence, and a value of a first bit in the bit sequence is different from a value of another bit in the bit sequence. Bits in the bit sequence one-to-one correspond to frequency resources in the plurality of frequency resources, and the first bit corresponds to the at least two frequency resources indicated by the first information.

In a possible design, the first information includes frequency resource indexes, and the frequency resource indexes identify the at least two frequency resources indicated by the first information.

In a possible design, the communication method in this embodiment of this application further includes: The access network device sends scheduling information to the terminal device on the primary frequency resource. The scheduling information indicates a location of a data transmission resource, the data transmission resource is distributed on each frequency resource indicated by the first information, and the frequency resources indicated by the first information include the primary frequency resource.

In a possible design, the communication method in this embodiment of this application further includes: The access network device receives feedback information from the terminal device on the primary frequency resource. The feedback information indicates transmission statuses of the data transmission resource in a same codebook. Alternatively, the feedback information includes first feedback information and second feedback information, the first feedback information indicates a transmission status of the data transmission resource on a third frequency resource in a first codebook, the second feedback information indicates a transmission status of the data transmission resource on a fourth frequency resource in a second codebook, the first feedback information and the second feedback information are transmitted by using different transmission resources, and the first frequency resource includes the third frequency resource and the fourth frequency resource.

In a possible design, the first feedback information further indicates a transmission status of the data transmission resource on a fifth frequency resource in the first codebook. The first frequency resource further includes the fifth frequency resource. A time difference between data transmissions respectively performed on the fifth frequency resource and the third frequency resource is less than a first threshold, a time difference between data transmissions respectively performed on the fourth frequency resource and the third frequency resource is greater than or equal to the first threshold, and a time difference between data transmissions respectively performed on the fourth frequency resource and the fifth frequency resource is greater than or equal to the first threshold.

In a possible design, the communication method in this embodiment of this application further includes: The access network device sends first scheduling information to the terminal device on a third frequency resource. The first scheduling information indicates a location of a data transmission resource on the third frequency resource, and the first frequency resource includes the third frequency resource. The access network device sends second scheduling information to the terminal device on a fourth frequency resource. The second scheduling information indicates a location of the data transmission resource on the fourth frequency resource, and the first frequency resource includes the fourth frequency resource.

In a possible design, the communication method in this embodiment of this application further includes: The access network device receives first feedback information from the terminal device on the third frequency resource. The first feedback information indicates a transmission status of the data transmission resource on the third frequency resource. The access network device receives second feedback information from the terminal device on the fourth frequency resource. The second feedback information indicates a transmission status of the data transmission resource on the fourth frequency resource.

In a possible design, the communication method in this embodiment of this application further includes: The access network device sends fourth information to the terminal device. The fourth information indicates a feedback manner, and the feedback manner is used to feed back a transmission status of the data transmission resource, to implement a flexible configuration of the feedback manner.

According to a third aspect, an embodiment of this application provides a communication apparatus. The communication apparatus may be the terminal device in the first aspect or any possible design of the first aspect, or a chip that implements functions of the terminal device. The communication apparatus includes corresponding modules, units, or means (means) for implementing the foregoing method. The modules, the units, or the means may be implemented by using hardware or software, or implemented by hardware by executing corresponding software. The hardware or the software includes one or more modules or units corresponding to the foregoing functions.

The communication apparatus includes a receiving unit, a processing unit, and a sending unit. The processing unit receives first information from an access network device by using the receiving unit. The first information indicates that at least two frequency resources in a plurality of frequency resources are activated, and the plurality of frequency resources are preconfigured. The processing unit performs a data transmission with the access network device on a first frequency resource by using the sending unit. The at least two frequency resources indicated by the first information include the first frequency resource.

In a possible design, the receiving unit is further configured to receive configuration information from the access network device by using a first beam. The first beam corresponds to a first resource group, the plurality of frequency resources belong to the first resource group, and the configuration information indicates a frequency resource configuration of the first resource group.

In a possible design, that the first beam corresponds to a first resource group includes: A first index corresponds to the first resource group, and the first index identifies the first beam.

In a possible design, the receiving unit is further configured to receive configuration information from the access network device. The configuration information indicates a first index, the first index corresponds to a first resource group, the plurality of frequency resources belong to the first resource group, and the configuration information indicates a frequency resource configuration of the first resource group.

In a possible design, the first index includes one of the following: an index of a synchronization signal block SSB or an index of a channel state information-reference signal CSI-RS.

In a possible design, the first information is carried in one of the following: radio resource control RRC signaling, downlink control information DCI, or a media access control control element MAC CE.

In a possible design, the receiving unit is further configured to receive second information from the access network device. The second information indicates candidate frequency resources, a quantity of candidate frequency resources is determined based on a capability of the communication apparatus, and the first information indicates that at least two frequency resources in the candidate frequency resources are activated.

In a possible design, when running of a timer expires, the processing unit is further configured to switch the sending unit and the receiving unit to a default frequency resource. Effective duration of the timer indicates duration in which a frequency resource in the frequency resources indicated by the first information is in an activated state, and the plurality of frequency resources include the default frequency resource.

In a possible design, there is one timer.

In a possible design, a quantity of timers and a quantity of frequency resources indicated by the first information are consistent and are in one-to-one correspondence, effective duration of each timer indicates duration in which a corresponding frequency resource is in an activated state, and that running of a timer expires includes: running of each timer expires.

In a possible design, the receiving unit is further configured to receive timer information from the access network device on a primary frequency resource. The timer information indicates to trigger the timer, and the frequency resources indicated by the first information include the primary frequency resource.

In a possible design, the receiving unit is further configured to receive third information from the access network device. The third information indicates a deactivated frequency resource, and the frequency resource indicated by the third information is at least one of the frequency resources indicated by the first information.

In a possible design, the receiving unit is further configured to receive switching information from the access network device. The switching information indicates that at least two frequency resources in a second resource group are activated. The processing unit is configured to switch the sending unit and the receiving unit from all frequency resources to the frequency resources indicated by the switching information. All the frequency resources are all of the frequency resources indicated by the first information.

In a possible design, the switching information further indicates at least one of the following: resource group switching or beam switching.

In a possible design, the receiving unit is further configured to receive switching information from the access network device. The switching information indicates that at least one frequency resource in a second resource group is activated. The processing unit is configured to switch the sending unit and the receiving unit from some frequency resources to the frequency resource indicated by the switching information. The some frequency resources are some of the frequency resources indicated by the first information.

In a possible design, the some frequency resources include the primary frequency resource and/or a secondary frequency resource.

In a possible design, the receiving unit is further configured to receive indication information from the access network device. The indication information indicates at least one of the following: a primary frequency resource in the second resource group; a secondary frequency resource in the second resource group; and a frequency offset. The frequency offset indicates a frequency offset between the second resource group and the first resource group, and the first resource group includes the at least two resources indicated by the first information.

In a possible design, the switching information indicates a second index. The second index corresponds to the second resource group.

In a possible design, the first information is transmitted by using the primary frequency resource. The plurality of frequency resources include the primary frequency resource, and the at least two frequency resources indicated by the first information belong to secondary frequency resources.

In a possible design, the first information includes a bit sequence, and a value of a first bit in the bit sequence is different from a value of another bit in the bit sequence. Bits in the bit sequence one-to-one correspond to frequency resources in the plurality of frequency resources, and the first bit corresponds to the at least two frequency resources indicated by the first information.

In a possible design, the first information includes frequency resource indexes, and the frequency resource indexes identify the at least two frequency resources indicated by the first information.

In a possible design, the receiving unit is further configured to receive scheduling information from the access network device on the primary frequency resource. The scheduling information indicates a location of a data transmission resource, the data transmission resource is distributed on each frequency resource indicated by the first information, and the frequency resources indicated by the first information include the primary frequency resource.

In a possible design, the sending unit is further configured to send feedback information to the access network device on the primary frequency resource. The feedback information indicates transmission statuses of the data transmission resource in a same codebook. Alternatively, the feedback information includes first feedback information and second feedback information, the first feedback information indicates a transmission status of the data transmission resource on a third frequency resource in a first codebook, the second feedback information indicates a transmission status of the data transmission resource on a fourth frequency resource in a second codebook, the first feedback information and the second feedback information are transmitted by using different transmission resources, and the first frequency resource includes the third frequency resource and the fourth frequency resource.

In a possible design, the first feedback information further indicates a transmission status of the data transmission resource on a fifth frequency resource in the first codebook. The first frequency resource further includes the fifth frequency resource. A time difference between data transmissions respectively performed on the fifth frequency resource and the third frequency resource is less than a first threshold, a time difference between data transmissions respectively performed on the fourth frequency resource and the third frequency resource is greater than or equal to the first threshold, and a time difference between data transmissions respectively performed on the fourth frequency resource and the fifth frequency resource is greater than or equal to the first threshold.

In a possible design, the receiving unit is further configured to receive first scheduling information from the access network device on a third frequency resource. The first scheduling information indicates a location of a data transmission resource on the third frequency resource, and the first frequency resource includes the third frequency resource. The receiving unit is further configured to receive second scheduling information from the access network device on a fourth frequency resource. The second scheduling information indicates a location of the data transmission resource on the fourth frequency resource, and the first frequency resource includes the fourth frequency resource.

In a possible design, the communication method in this embodiment of this application further includes: The terminal device sends first feedback information to the access network device on the third frequency resource. The first feedback information indicates a transmission status of the data transmission resource on the third frequency resource. The terminal device sends second feedback information to the access network device on the fourth frequency resource. The second feedback information indicates a transmission status of the data transmission resource on the fourth frequency resource.

In a possible design, the receiving unit is further configured to receive fourth information from the access network device. The fourth information indicates a feedback manner, and the feedback manner is used to feed back a transmission status of the data transmission resource.

According to a fourth aspect, an embodiment of this application provides a communication apparatus. The communication apparatus may be the access network device in the second aspect or any possible design of the second aspect, or a chip that implements functions of the access network device. The communication apparatus includes corresponding modules, units, or means (means) for implementing the foregoing method. The modules, the units, or the means may be implemented by using hardware or software, or implemented by hardware by executing corresponding software. The hardware or the software includes one or more modules or units corresponding to the foregoing functions.

The communication apparatus includes a receiving unit, a processing unit, and a sending unit. The processing unit controls the sending unit to send first information to a terminal device. The first information indicates that at least two frequency resources in a plurality of frequency resources are activated, and the plurality of frequency resources are preconfigured. The processing unit controls the sending unit to perform a data transmission with the terminal device on a first frequency resource. The at least two frequency resources indicated by the first information include the first frequency resource.

In a possible design, the sending unit is further configured to send configuration information to the terminal device by using a first beam. The first beam corresponds to a first resource group, the plurality of frequency resources belong to the first resource group, and the configuration information indicates a frequency resource configuration of the first resource group.

In a possible design, that the first beam corresponds to a first resource group includes: A first index corresponds to the first resource group, and the first index identifies the first beam.

In a possible design, the sending unit is further configured to send configuration information to the terminal device. The configuration information indicates a first index, the first index corresponds to a first resource group, the plurality of frequency resources belong to the first resource group, and the configuration information indicates a frequency resource configuration of the first resource group.

In a possible design, the first index includes one of the following: an index of a synchronization signal block SSB or an index of a channel state information-reference signal CSI-RS.

In a possible design, the first information is carried in one of the following: radio resource control RRC signaling, downlink control information DCI, or a media access control control element MAC CE.

In a possible design, the sending unit is further configured to send second information to the terminal device. The second information indicates candidate frequency resources, a quantity of candidate frequency resources is determined based on a capability of the terminal device, and the first information indicates that at least two frequency resources in the candidate frequency resources are activated.

In a possible design, the sending unit is further configured to send timer information to the terminal device on a primary frequency resource. The timer information indicates to trigger a timer, the frequency resources indicated by the first information include the primary frequency resource, and effective duration of the timer indicates duration in which a frequency resource in the frequency resources indicated by the first information is in an activated state.

In a possible design, there is one timer.

In a possible design, a quantity of timers and a quantity of frequency resources indicated by the first information are consistent and are in one-to-one correspondence, and effective duration of each timer indicates duration in which a corresponding frequency resource is in an activated state.

In a possible design, the sending unit is further configured to send third information to the terminal device. The third information indicates a deactivated frequency resource, and the frequency resource indicated by the third information is at least one of the frequency resources indicated by the first information.

In a possible design, the sending unit is further configured to send switching information to the terminal device. The switching information indicates that at least two frequency resources in a second resource group are activated.

In a possible design, the switching information further indicates at least one of the following: resource group switching or beam switching.

In a possible design, the sending unit is further configured to send switching information to the terminal device. The switching information indicates that at least one frequency resource in a second resource group is activated.

In a possible design, the some frequency resources include the primary frequency resource and/or a secondary frequency resource.

In a possible design, the sending unit is further configured to send indication information to the terminal device. The indication information indicates at least one of the following: a primary frequency resource in the second resource group; a secondary frequency resource in the second resource group; and a frequency offset. The frequency offset indicates a frequency offset between the second resource group and the first resource group, and the first resource group includes the at least two resources indicated by the first information.

In a possible design, the switching information indicates a second index. The second index corresponds to the second resource group.

In a possible design, the first information is transmitted by using the primary frequency resource. The plurality of frequency resources include the primary frequency resource, and the at least two frequency resources indicated by the first information belong to secondary frequency resources.

In a possible design, the first information includes a bit sequence, and a value of a first bit in the bit sequence is different from a value of another bit in the bit sequence. Bits in the bit sequence one-to-one correspond to frequency resources in the plurality of frequency resources, and the first bit corresponds to the at least two frequency resources indicated by the first information.

In a possible design, the first information includes frequency resource indexes, and the frequency resource indexes identify the at least two frequency resources indicated by the first information.

In a possible design, the sending unit is further configured to send scheduling information to the terminal device on the primary frequency resource. The scheduling information indicates a location of a data transmission resource, the data transmission resource is distributed on each frequency resource indicated by the first information, and the frequency resources indicated by the first information include the primary frequency resource.

In a possible design, the receiving unit is further configured to receive feedback information from the terminal device on the primary frequency resource. The feedback information indicates transmission statuses of the data transmission resource in a same codebook. Alternatively, the feedback information includes first feedback information and second feedback information, the first feedback information indicates a transmission status of the data transmission resource on a third frequency resource in a first codebook, the second feedback information indicates a transmission status of the data transmission resource on a fourth frequency resource in a second codebook, the first feedback information and the second feedback information are transmitted by using different transmission resources, and the first frequency resource includes the third frequency resource and the fourth frequency resource.

In a possible design, the first feedback information further indicates a transmission status of the data transmission resource on a fifth frequency resource in the first codebook. The first frequency resource further includes the fifth frequency resource. A time difference between data transmissions respectively performed on the fifth frequency resource and the third frequency resource is less than a first threshold, a time difference between data transmissions respectively performed on the fourth frequency resource and the third frequency resource is greater than or equal to the first threshold, and a time difference between data transmissions respectively performed on the fourth frequency resource and the fifth frequency resource is greater than or equal to the first threshold.

In a possible design, the sending unit is further configured to send first scheduling information to the terminal device on a third frequency resource. The first scheduling information indicates a location of a data transmission resource on the third frequency resource, and the first frequency resource includes the third frequency resource. The sending unit is further configured to send second scheduling information to the terminal device on a fourth frequency resource. The second scheduling information indicates a location of the data transmission resource on the fourth frequency resource, and the first frequency resource includes the fourth frequency resource.

In a possible design, the receiving unit is further configured to receive first feedback information from the terminal device on the third frequency resource. The first feedback information indicates a transmission status of the data transmission resource on the third frequency resource. The receiving unit is further configured to receive second feedback information from the terminal device on the fourth frequency resource. The second feedback information indicates a transmission status of the data transmission resource on the fourth frequency resource.

In a possible design, the sending unit is further configured to send fourth information to the terminal device. The fourth information indicates a feedback manner, and the feedback manner is used to feed back a transmission status of the data transmission resource.

According to a fifth aspect, an embodiment of this application provides a communication apparatus, including a processor and a memory. The memory is configured to store computer instructions, and when the processor executes the instructions, the communication apparatus is enabled to perform the method performed by the terminal device in any one of the foregoing aspects or any possible design of any one of the foregoing aspects. The communication apparatus may be the terminal device in the first aspect or any possible design of the first aspect, or a chip that implements functions of the terminal device.

According to a sixth aspect, an embodiment of this application provides a communication apparatus, including a processor. The processor is coupled to a memory, and is configured to read and execute instructions in the memory, so that the communication apparatus performs the method performed by the terminal device in any one of the foregoing aspects or any possible design of any one of the foregoing aspects. The communication apparatus may be the terminal device in the first aspect or any possible design of the first aspect, or a chip that implements functions of the terminal device.

According to a seventh aspect, an embodiment of this application provides a chip, including a processing circuit and an input/output interface. The input/output interface is configured to communicate with a module outside the chip. For example, the chip may be a chip that implements functions of the terminal device in the first aspect or any possible design of the first aspect. The processing circuit is configured to run a computer program or instructions, to implement the method according to the first aspect or any possible design of the first aspect.

According to an eighth aspect, an embodiment of this application provides a communication apparatus, including a processor and a memory. The memory is configured to store computer instructions, and when the processor executes the instructions, the communication apparatus is enabled to perform the method performed by the access network device in any one of the foregoing aspects or any possible design of any one of the foregoing aspects. The communication apparatus may be the access network device in the second aspect or any possible design of the second aspect, or a chip that implements functions of the access network device.

According to a ninth aspect, an embodiment of this application provides a communication apparatus, including a processor. The processor is coupled to a memory, and is configured to read and execute instructions in the memory, so that the communication apparatus performs the method performed by the access network device in any one of the foregoing aspects or any possible design of any one of the foregoing aspects. The communication apparatus may be the access network device in the second aspect or any possible design of the second aspect, or a chip that implements functions of the access network device.

According to a tenth aspect, an embodiment of this application provides a chip, including a processing circuit and an input/output interface. The input/output interface is configured to communicate with a module outside the chip. For example, the chip may be a chip that implements functions of the access network device in the second aspect or any possible design of the second aspect. The processing circuit is configured to run a computer program or instructions, to implement the method according to the second aspect or any possible design of the second aspect.

According to an eleventh aspect, an embodiment of this application provides a computer-readable storage medium. The computer-readable storage medium stores instructions, and when the instructions are run on a computer, the computer is enabled to perform the method according to any one of the foregoing aspects.

According to a twelfth aspect, an embodiment of this application provides a computer program product including instructions. When the computer program product runs on a computer, the computer is enabled to perform the method according to any one of the foregoing aspects.

According to a thirteenth aspect, an embodiment of this application provides a circuit system. The circuit system includes a processing circuit, and the processing circuit is configured to perform the method according to any one of the foregoing aspects.

According to a fourteenth aspect, an embodiment of this application provides a communication system. The communication system includes the client device and the access network device in any one of the foregoing aspects.

For technical effects brought by any design in the second aspect to the fourteenth aspect, refer to beneficial effects in the corresponding method provided above. Details are not described herein again.

### BRIEF DESCRIPTION OF DRAWINGS

FIG. 1 is a schematic diagram of an architecture of a communication system according to an embodiment of this application;
FIG. 2 is a schematic diagram of a BWP resource location according to an embodiment of this application;
FIG. 3 is a schematic flowchart of a communication method according to an embodiment of this application;
FIG. 4 is a schematic diagram of frequency resource distribution according to an embodiment of this application;
FIG. 5a is a schematic diagram of a beam sweeping scenario according to an embodiment of this application;
FIG. 5b is a schematic diagram of another beam sweeping scenario according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic flowchart of still another communication method according to an embodiment of this application;
FIG. 11 is a schematic diagram of another frequency resource coordination scenario according to an embodiment of this application;
FIG. 12 is a schematic flowchart of still another communication method according to an embodiment of this application;
FIG. 13 is a schematic diagram of a frequency resource switching scenario according to an embodiment of this application;
FIG. 14 is a schematic diagram of a structure of a communication apparatus according to an embodiment of this application; and
FIG. 15 is a schematic diagram of a structure of another communication apparatus according to an embodiment of this application.

### DESCRIPTION OF EMBODIMENTS

The following describes technical solutions of this application with reference to accompanying drawings.

The technical solutions in embodiments of this application are applicable to a communication system integrating terrestrial communication with satellite communication. The communication system may also be referred to as a non-terrestrial network (non-terrestrial network, NTN) communication system. A terrestrial communication system may be, for example, a long term evolution (long term evolution, LTE) system, a universal mobile telecommunications system (universal mobile telecommunications system, UMTS), a civil communication system or a new radio (new radio, NR) system, or a future next generation mobile communication system.

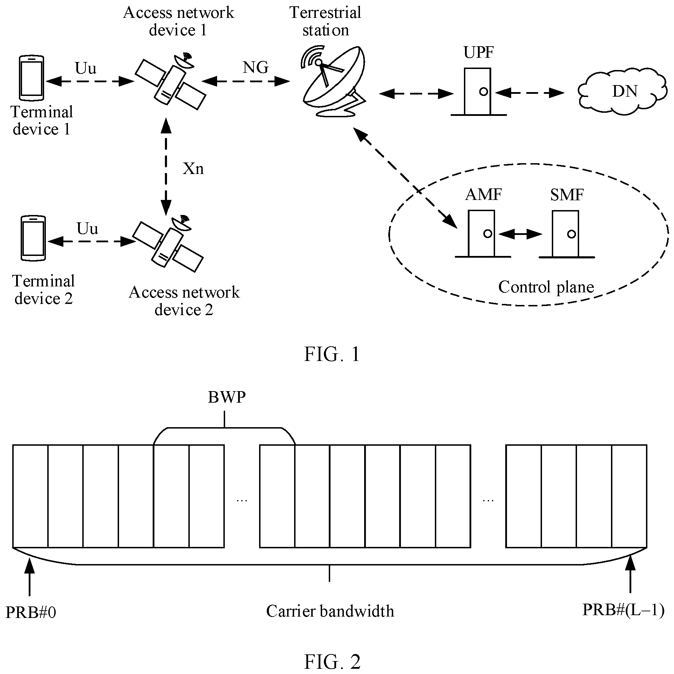

FIG. 1 is a schematic diagram of an NTN communication system according to an embodiment of this application. In FIG. 1, an example in which the NTN communication system integrates 5G communication with satellite communication is used. As shown in FIG. 1, the communication system includes a terminal device 1, a terminal device 2, an access network device 1, an access network device 2, and a core network device.

The terminal device may access a network (for example, the access network device) through a 5G new radio interface (for example, a Uu interface), and the access network device may be connected to the core network device through a radio link (for example, an NG interface). For example, the NG interface may be configured to exchange non-access stratum (non-access stratum, NAS) signaling or other signaling of the core network device and service data of a user. In addition, there is a radio link (for example, an Xn interface) between the access network devices, to complete signaling exchange and a user data transmission between the access network devices. For example, the Xn interface may be configured to exchange switching signaling or other signaling.

In FIG. 1, the terminal device may be a terrestrial mobile terminal device or a terrestrial fixed terminal device, the access network device may be deployed on a satellite or on the ground, and the core network device may be deployed on the ground. When the access network device is deployed on the satellite, the access network device may be referred to as a satellite network device.

Optionally, the communication system shown in FIG. 1 may further include a terrestrial station responsible for forwarding signaling and service data between the satellite network device and the core network device. For example, the terrestrial station may be connected to the satellite network device through a radio link (for example, an NG interface), and connected to an access and mobility management function (access and mobility management function, AMF) network element or a user plane function (user plane function, UPF) network element through a radio link or a wired link.

In embodiments of this application, the terminal device may also be referred to as user equipment (user equipment, UE), a mobile station (mobile station, MS), a mobile terminal (mobile terminal, MT), an access terminal, a subscriber unit, a subscriber station, a mobile console, a mobile station, a remote station, a remote terminal, a mobile device, a user terminal, a terminal, a wireless communication device, a user agent, a user apparatus, or the like.

The terminal device may be a device that provides voice and/or data connectivity for a user, for example, a handheld device having a wireless connection function or a vehicle-mounted device. Currently, some examples of the terminal device may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a vehicle-mounted device, a wearable device, a terminal device in a 5G network, a terminal device in an evolved public land mobile network (public land mobile network, PLMN), or the like. This is not limited in embodiments of this application.

In embodiments of this application, the access network device may be a device configured to communicate with the terminal device; and mainly provides a radio access service, schedules a radio resource for the terminal device, and provides a reliable wireless transmission protocol and data encryption protocol. The access network device may also be referred to as an access device or a radio access network device. The access network device may be an evolved NodeB (evolved NodeB, eNB or eNodeB) in an LTE system; or may be a radio controller in a cloud radio access network (cloud radio access network, CRAN) scenario; or may be a relay station, an access point, a vehicle-mounted device, a wearable device, an access device in a 5G network, a network device in a future evolved PLMN network, or the like; or may be an access point (access point, AP) in a WLAN; or may be a gNB in an NR system. This is not limited in embodiments of this application.

In addition, in embodiments of this application, the access network device is a device in a RAN, in other words, is a RAN node that connects the terminal device to a wireless network. For example, the access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In a network structure, the access network device may include a central unit (central unit, CU) node, a distributed unit (distributed unit, DU) node, a RAN device including a CU node and a DU node, or a RAN device including a CU control plane node (CU-CP node), a CU user plane node (CU-UP node), and a DU node.

In this embodiment of this application, the core network device may be connected to the access network device, and is used for user access control, mobility association, session management, user security authentication, charging, and other services. The core network device may include a plurality of functional units that may be classified into, for example, a control plane function entity and a data plane function entity. The control plane function entity includes, for example, an access management function (access management function, AMF) and a session management function (session management function, SMF). The data plane function entity includes, for example, a UPF and a data network (data network, DN).

The AMF is mainly responsible for access and mobility control, including registration management (registration management, RM) and connection management (connection management, CM), access authentication and access authorization, reachability management, mobility management, and the like.

The SMF is responsible for session management, including establishment, modification, release, and the like of a packet data unit (packet data unit, PDU) session.

The UPF mainly provides user plane support, including a connection point between a PDU session and a data network, routing and forwarding of a data packet, data packet detection and user plane policy execution, processing of quality of service (quality of service, QoS) for a user plane, downlink data packet buffering, downlink data notification triggering, and the like.

For example, as shown in FIG. 1, the core network device may include, for example, a 5G control plane and a 5G data plane. The 5G control plane may include an AMF and an SMF, and the 5G data plane includes a UPF and a data network.

It should be understood that the communication system in FIG. 1 is merely an example for description, and a communication system applicable to this application is not limited thereto. For example, one access network device may serve a plurality of terminal devices, and one terminal device is only used as an example in FIG. 1. For another example, a core network side may further include another core network device, for example, an authentication server function (authentication server function, AUSF) or a packet control function (packet control function, PCF).

To facilitate understanding of embodiments of this application, the following briefly describes related terms in this application.

### 1. Hybrid automatic repeat request (hybrid automatic repeat request, HARQ)

The HARQ is a technology that combines a forward error correction (forward error correction, FEC) method and an automatic repeat request (automatic repeat request, ARQ) method. In the HARQ, an error is automatically corrected within an error correction capability range; and if the error correction capability range is exceeded, a transmitting end is required to perform a retransmission. This improves system reliability and also improves system transmission efficiency.

The FEC means that data sent by the transmitting end includes forward error correction code or redundant information. After receiving the data, a receiving end finds an error through a check, for example, a cyclic redundancy check (cyclic redundancy check, CRC), and then can correct the error by using the forward error correction code or the redundant information. In this way, the transmitting end can reduce a quantity of retransmissions (namely, data retransmissions).

The ARQ means that the receiving end determines correctness of the received data through a check, for example, a CRC check. If the receiving end correctly receives the data, the receiving end sends an acknowledgment (acknowledgment, ACK) to notify the transmitting end; otherwise, the receiving end sends a negative acknowledgment (negative acknowledgment, NACK) to notify the transmitting end. When receiving the NACK, the transmitting end may retransmit the data to the receiving end. The ACK and the NACK are HARQ feedbacks.

A HARQ-ACK feedback codebook is a bit sequence formed by connecting a plurality of HARQ feedbacks in series in a specific order. The HARQ-ACK feedback codebook may also be described as a HARQ feedback codebook, a HARQ codebook, or a codebook. In embodiments of this application, a codebook is used as an example for description.

### 2. Cell (cell)

The cell is described by a higher-layer protocol layer from a perspective of resource management, mobility management, or a service unit. The higher-layer protocol layer is a protocol layer above a physical layer, for example, a radio resource control (radio resource control, RRC) layer or a media access control (media access control, MAC) layer. Coverage of each access network device may be divided into one or more cells. One cell may be considered as being formed by specific frequency domain resources, that is, one cell may include a downlink component carrier (component carrier, CC) and at least one uplink CC. Therefore, one BWP may also be understood as some of bandwidths of one cell.

Scheduling information of the physical layer indicates a time-frequency resource location of a physical downlink shared channel (physical downlink shared channel, PDSCH) and/or a time-frequency resource location of a physical uplink shared channel (physical uplink shared channel, PUSCH).

### 3. BWP

In an NR system, the system supports a carrier with a bandwidth of up to 400 MHz. If all terminal devices are required to support a carrier bandwidth of 400 MHz, a very high requirement is imposed on bandwidth capabilities of the terminal devices, and the terminal devices increase energy consumption. To reduce a requirement on a bandwidth capability of a terminal device and reduce energy consumption of the terminal device, a concept of the BWP is proposed in NR. The BWP supports the terminal device to perform a data transmission and related operations on a bandwidth part of a wide carrier.

As shown in FIG. 2, the BWP includes N physical resource blocks (physical resource block, PRB), and each physical resource block includes K subcarriers (subcarrier), where N is an integer greater than or equal to 1 (for example, N=2), and K is an integer greater than or equal to 1 (for example, K=2). The N physical resource blocks may be contiguous or non-contiguous. A carrier bandwidth (carrier bandwidth) in FIG. 2 may be a frequency domain bandwidth provided by a carrier (carrier) on which a 4G or 5G mobile communication system works, and includes L PRBs. L is an integer greater than or equal to 1, and L is greater than or equal to N.

An access network device may allocate at least one BWP to one terminal device served by the access network device. In consideration of frequency selective fading (frequency selective fading), BWPs at different locations on one carrier bandwidth may have different fading characteristics. For a terminal device, an access network device serving the terminal device may allocate a BWP in a good channel condition to the terminal device as much as possible.

When a bandwidth of a cell is relatively large, the terminal device may work only on a BWP of the cell. Each BWP corresponds to a physical layer parameter, which may be referred to as a parameter set (numerology), and includes a subcarrier spacing (subcarrier spacing, SCS) configuration and a cyclic prefix (cyclic prefix, CP) length configuration. Different BWPs may support same numerology or different numerology.

The BWP may be understood as frequency bands of different widths. In embodiments of this application, the BWP is used as an example for description, and another name is not limited, for example, a channel, a frequency channel, a frequency bandwidth, a frequency band, a frequency domain, or a frequency resource.

In a possible design, configuration information of each BWP includes at least a physical resource block offset (PRB Offset), a quantity of physical resource blocks (number of PRBs), and a subcarrier spacing.

The physical resource block offset may be an offset of a 1^{st} physical resource block included in one BWP relative to a 1^{st} physical resource block included in an entire carrier bandwidth. In addition, the configuration information of each BWP may further include at least one of the following parameters: a cyclic prefix length (cyclic prefix length), a transmission time interval (transmission time interval, TTI), a center frequency (center frequency), a frequency location (frequency location), and an index of the BWP.

In this application, an initial BWP (initial BWP) may be used as a BWP used in a process of establishing a connection between the terminal device and the access network device. The initial BWP is indicated by the access network device in a system message. A default BWP (default BWP) may be used as a bandwidth segment used after the terminal device wakes up from a sleep process, or may be a bandwidth segment used after the terminal device loses uplink synchronization, or may be a bandwidth segment used when the terminal device initiates random access. The default BWP may be the same as the initial BWP.

BWP types include a primary BWP and a secondary BWP.

A BWP status includes an activated state and an inactivated state. The activated state means a working state. That the BWP is in the activated state means that the BWP is in the working state, or may be described as an "activated BWP". For example, the BWP may implement signal sending or receiving. The inactivated state is opposite to the activated state, and means a non-working state. That the BWP is in the inactivated state means that the BWP is in the non-working state, or may be described as an "inactivated BWP" or a "deactivated BWP". For example, the BWP may not implement signal sending or receiving. A process of switching the BWP from the inactivated state to the activated state or a process of switching the BWP in the non-working state to the BWP in the working state means activating the BWP. Correspondingly, a process of switching the BWP from the activated state to the inactivated state or switching the BWP in the working state to the BWP in the non-working state means deactivating the BWP, or may mean performing deactivation on the BWP.

BWP switching (switching) is for switching the activated BWP. In an existing standard, when the terminal device works in one cell, there is only one activated downlink BWP (downlink BWP, DL BWP) and one activated uplink BWP (uplink BWP, UL BWP). However, the activated BWP can be changed, which is referred to as "BWP switching".

For example, both a frequency division duplex (frequency division duplex, FDD) system and a time division duplex (time division duplex, TDD) system support the BWP. The BWP can be classified into a downlink BWP and an uplink BWP. The access network device may configure a plurality of DL BWPs and a plurality of UL BWPs for the terminal device, and activate at least one DL BWP and at least one UL BWP. The terminal device receives a downlink transmission from the access network device on the activated DL BWP (namely, the active DL BWP). The downlink transmission includes but is not limited to a downlink control signaling transmission and a downlink data transmission. The terminal device sends an uplink transmission on the activated UL BWP. The uplink transmission includes but is not limited to an uplink control signaling transmission, an uplink data transmission, and an uplink reference signal transmission. Uplink control signaling includes HARQ feedback information, a scheduling request (scheduling request, SR), and channel state information (channel state information, CSI). An uplink reference signal includes a demodulation reference signal (demodulation reference signal, DMRS), a phase tracking reference channel (phase tracking reference signal, PTRS), a sounding reference signal (sounding reference signal, SRS), and the like.

The following two manners are supported when the activated BWP is switched:
Manner 1: downlink control information (downlink control information, DCI) scheduling manner. For example, the access network device configures two DL BWPs for the terminal device: DL BWP1 and DL BWP2. A DL BWP activated by the terminal device is DL BWP1. In this case, the access network device may send a BWP switching indication. The switching indication is carried on a physical downlink control channel (physical downlink control channel, PDCCH), and is transmitted through the PDCCH, so that the DL BWP of the terminal device is switched to DL BWP2. Likewise, the access network device may also indicate the activated UL BWP of the terminal device to perform switching, and may also perform the indication through the PDCCH.
Manner 2: dedicated timer manner. For example, a BWP deactivation timer (BWP inactivity timer) is used. In an FDD scenario, when running of a dedicated timer expires, the terminal device switches a currently activated DL BWP to a default DL BWP. In a TDD scenario, when running of a dedicated timer expires, the terminal device switches a currently activated BWP pair (BWP pair) to a default BWP pair.

The BWP switching can adapt to a service change on a terminal device side. For example, when a to-be-sent service data amount is relatively small, the terminal device may switch to a BWP with a relatively small bandwidth; and when a to-be-sent service data amount is relatively large, the terminal device may switch to a BWP with a relatively large bandwidth. The access network device may select different BWPs based on different service requirements, thereby improving system flexibility. When there is no transmission requirement, the terminal device switches to the default BWP, to reduce power consumption of the terminal device.

However, during satellite communication, for a terminal device in a connected state, a maximum of four dedicated BWPs can be configured for one cell. In a case of BWP switching, the terminal device performs switching between a maximum of four dedicated BWPs. Bandwidth values corresponding to the four dedicated BWPs are limited, and only one uplink BWP and one downlink BWP of the terminal device are activated at a moment. Consequently, the access network device cannot flexibly configure more bandwidths for the terminal device, and cannot adapt to a service change on the terminal device side, and data transmission efficiency is low.

In view of this, an embodiment of this application provides a communication method, applied to the communication system in FIG. 1. In the communication method provided in this embodiment of this application, a terminal device receives first information from an access network device. The first information indicates that at least two frequency resources in a plurality of frequency resources are activated, and the plurality of frequency resources are preconfigured. Then, the terminal device performs a data transmission with the access network device on a first frequency resource. The at least two frequency resources indicated by the first information include the first frequency resource. In this way, at a moment, the terminal device has more frequency resources, that is, at least two frequency resources are activated. Therefore, the access network device may select, from the at least two frequency resources, a frequency resource used for a data transmission. Even if the terminal device performs frequency resource switching, the access network device can also configure bandwidths of more values for the terminal device, thereby improving bandwidth configuration flexibility, better adapting to a service change on a terminal device side, and improving data transmission efficiency.

It should be noted that, in this embodiment of this application, the frequency resource may have another name, for example, a bandwidth segment, a partial bandwidth, a frequency domain resource, a frequency band, or a BWP. In this embodiment of this application, only the frequency resource is used as an example for description. For example, one frequency resource includes at least one RB.

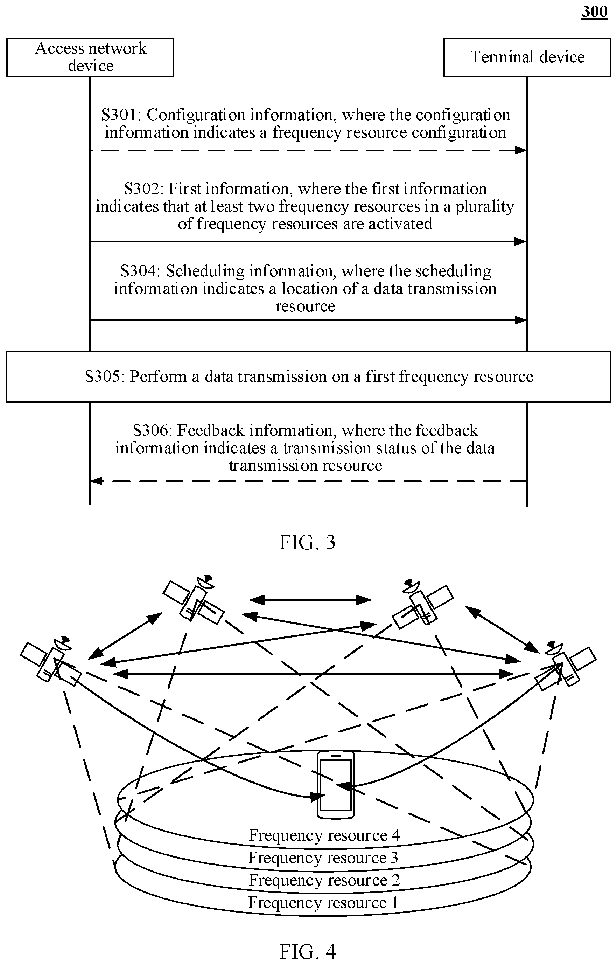

With reference to FIG. 3, the following describes in detail a communication method 300 provided in an embodiment of this application. The communication method 300 includes the following steps.

S301: An access network device sends configuration information to a terminal device. Correspondingly, the terminal device receives the configuration information from the access network device.

The configuration information indicates a frequency resource configuration. For example, the frequency resource configuration includes but is not limited to at least one of the following: a CP length, a subcarrier spacing, an RB offset, a quantity of RBs, and a polarization direction.

The frequency resource configuration includes configurations of a plurality of frequency resources. For example, the plurality of frequency resources include a frequency resource 1, a frequency resource 2, a frequency resource 3, and a frequency resource 4. The frequency resource configuration includes a configuration of the frequency resource 1, a configuration of the frequency resource 2, a configuration of the frequency resource 3, and a configuration of the frequency resource 4.

It should be understood that, in the plurality of frequency resources, configurations of different frequency resources may be the same or may be different. That configurations of frequency resources are different may mean that two frequency resources are different in one or more of the following indicators: CP lengths, subcarrier spacings, RB offsets, quantities of RBs, and polarization directions. For example, the frequency resource 1 and the frequency resource 2 are the same in CP lengths, subcarrier spacings, RB offsets, and quantities of RBs, but are different in polarization directions. The plurality of frequency resources may be from a same access network device, or may be from different access network devices. This is not limited in this embodiment of this application.

The configuration information indicates the frequency resource configuration in a plurality of manners, including but not limited to the following two examples:

### Example 1: Configuration information of different resource groups is transmitted by using different beams.

The plurality of frequency resources belong to a same resource group, for example, a first resource group. Configuration information corresponding to the first resource group is carried on a first beam. The first beam is a beam identified by a first index, and the first index corresponds to the first resource group. The first index includes but is not limited to one of the following: an index of a synchronization signal block (synchronization signal block, SSB) or an index of a channel state information-reference signal (channel state information-reference signal, CSI-RS).

For example, Table 1 shows configurations of four resource groups.

**Table 1**

| Index identifying a beam | Coverage area number | Resource group number | Frequency resource configuration | | | |
|---|---|---|---|---|---|---|
| SSB index 1 | Area 1 | Resource group 1 | Configuration of the frequency resource 1 | Configuration of the frequency resource 2 | Configuration of the frequency resource 3 | Configuration of the frequency resource 4 |
| SSB index 2 | Area 2 | Resource group 2 | Configuration of a frequency resource 5 | Configuration of a frequency resource 6 | Configuration of a frequency resource 7 | Configuration of a frequency resource 8 |
| SSB index 3 | Area 3 | Resource group 3 | Configuration of a frequency resource 9 | Configuration of a frequency resource 10 | Configuration of a frequency resource 11 | Configuration of a frequency resource 12 |
| SSB index 4 | Area 4 | Resource group 4 | Configuration of a frequency resource 13 | Configuration of a frequency resource 14 | Configuration of a frequency resource 15 | Configuration of a frequency resource 16 |

In Table 1, beams identified by different SSB indexes sweep different areas. For example, a sweeping area of a beam identified by the SSB index 1 is the foregoing area 1, and a sweeping area of a beam identified by the SSB index 2 is the foregoing area 2. For other information, refer to Table 1. The beam identified by the SSB index 1 is used to transmit configuration information of the resource group 1. The configuration information of the resource group 1 includes the configuration of the frequency resource 1, the configuration of the frequency resource 2, the configuration of the frequency resource 3, and the configuration of the frequency resource 4. Coverage areas of beams in which four frequency resources (namely, the frequency resource 1 to the frequency resource 4) are located include a same coverage area, for example, the area 1, or another area, which is not shown in Table 1. For descriptions of the other resource groups, refer to Table 1. Details are not described herein again. The first resource group may be the resource group 1 in Table 1. Correspondingly, the first beam is the beam identified by the SSB index 1. Certainly, the first resource group may alternatively be another resource group in Table 1. This is not limited in this embodiment of this application.

It should be noted that quantities of frequency resources in different resource groups may be the same or may be different. Table 1 is described by using only an example in which each resource group includes four frequency resources. A quantity of frequency resources in one resource group is not limited in this embodiment of this application. In each resource group in Table 1, a 1^{st} frequency resource may be a primary frequency resource, or another frequency resource is a primary frequency resource. The resource group 1 is used as an example. The primary frequency resource may be the frequency resource 1. Correspondingly, the frequency resource 2, the frequency resource 3, and the frequency resource 4 are secondary frequency resources. Alternatively, the primary frequency resource is the frequency resource 2. Correspondingly, the frequency resource 1, the frequency resource 3, and the frequency resource 4 are secondary frequency resources. Alternatively, the primary frequency resource is the frequency resource 3. Correspondingly, the frequency resource 1, the frequency resource 2, and the frequency resource 4 are secondary frequency resources. Alternatively, the primary frequency resource is the frequency resource 4. Correspondingly, the frequency resource 1, the frequency resource 2, and the frequency resource 3 are secondary frequency resources. In each resource group in Table 1, a 1^{st} frequency resource may be a default frequency resource, or another frequency resource is a default frequency resource. The resource group 1 is still used as an example. The default frequency resource may be the frequency resource 1. Alternatively, the default frequency resource is the frequency resource 2. Alternatively, the default frequency resource is the frequency resource 3. Alternatively, the default frequency resource is the frequency resource 4.

For the terminal device, after receiving a beam, the terminal device may determine that an index of the beam is received. Then, the terminal device may determine, based on a correspondence between an index of a beam and a frequency resource configuration of a resource group, a frequency resource configuration corresponding to the beam.

It should be understood that, for a plurality of frequency resources in a same resource group, coverage areas of beams in which the frequency resources are located may be the same, as shown in FIG. 4. Alternatively, the coverage areas of the beams corresponding to the frequency resources may be different (not shown in FIG. 4). However, the coverage areas of the beams in which the frequency resources are located include a same area, and the terminal device is located in the area.

Example 2: The configuration information indicates a first index. The first index corresponds to a first resource group. For descriptions of the first index and the resource group, refer to the descriptions in Example 1. Details are not described herein again. An example in which the first resource group is the resource group 1 in Table 1 is still used. Correspondingly, the first index is the SSB index 1 in Table 1. The configuration information indicates the first index by using two bits. For example, values of the two bits are 01, to indicate the SSB index 1. Certainly, the configuration information may alternatively indicate the first index by using other information such as a letter or a symbol. This is not limited in this embodiment of this application.

For the terminal device, after receiving the configuration information, the terminal device may determine an index indicated by the configuration information. Then, the terminal device may determine a frequency resource configuration based on a correspondence between an index indicated by the configuration information and a frequency resource configuration of a resource group.

It should be understood that, in Example 1 and Example 2, the correspondence between a frequency resource configuration of each resource group and an index is preset. The terminal device determines the frequency resource configuration based on the correspondence between the two. Certainly, the configuration information may alternatively directly indicate the frequency resource configuration. For example, the configuration information indicates subcarrier spacings, quantities of RBs, and CP lengths of a plurality of frequency resources (for example, the frequency resource 1, the frequency resource 2, the frequency resource 3, and the frequency resource 4). This is not limited in this embodiment of this application.

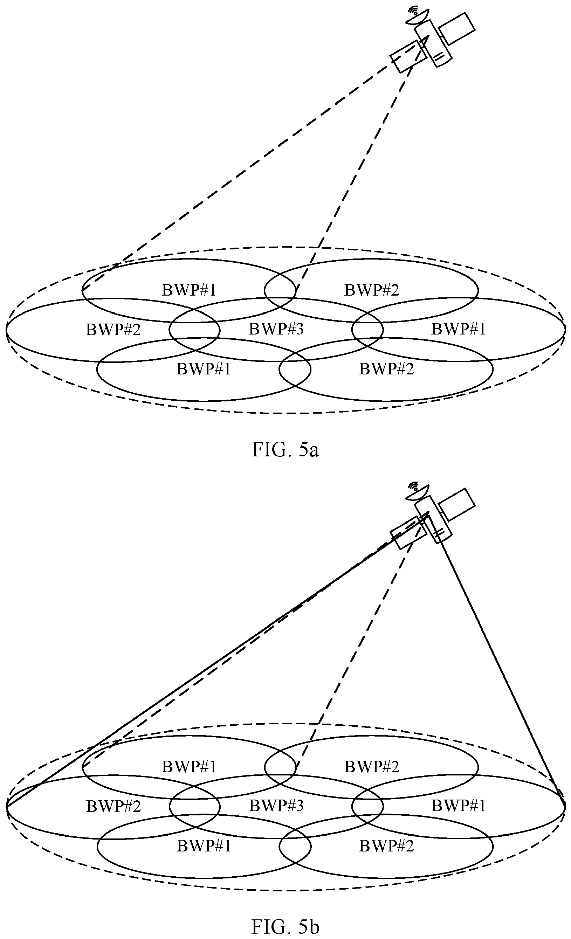

It should be noted that, in Example 1, a beam sweeping manner for transmitting the configuration information is shown in FIG. 5a. To be specific, a beam belongs to a narrow beam, and covers different data beams at different moments. As shown in FIG. 5a, at one moment, one narrow beam covers only one data beam. In Example 2, a beam coverage scenario for transmitting the configuration information is shown in FIG. 5b. To be specific, a beam belongs to a wide beam, and covers a plurality of data beams at a same moment. As shown in FIG. 5b, at one moment, one wide beam covers a plurality of data beams. The data beam is a beam that sends and/or receives a payload. In FIG. 5a and FIG. 5b, the data beam includes one BWP for a payload transmission.

S302: The access network device sends first information to the terminal device. Correspondingly, the terminal device receives the first information from the access network device.

The first information indicates that at least two frequency resources in a plurality of frequency resources are activated. The plurality of frequency resources in the first information are consistent with the frequency resources in the configuration information. For details, refer to the descriptions of S301. Details are not described herein again. Optionally, the first information may further indicate an activation time of a frequency resource. For example, the frequency resource 1 is activated at a time point 1, the frequency resource 2 is activated at a time point 2, and the time point 1 is different from the time point 2. In this way, the terminal device activates one or more frequency resources at one moment (some moments). Alternatively, the first information indicates that the frequency resource 1 and the frequency resource 3 are activated at the time point 1, the frequency resource 2 is activated at the time point 2, and the time point 1 is different from the time point 2. In this way, the terminal device activates two or more frequency resources at one moment (some moments).

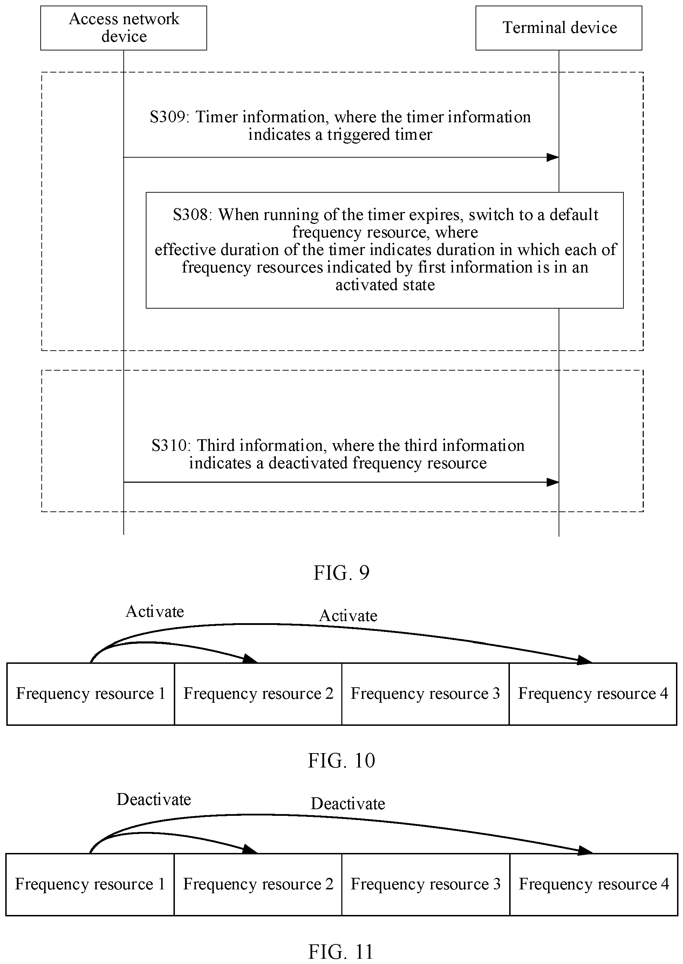

The first information indicates the activated frequency resources in a plurality of manners, including but not limited to the following descriptions:
For example, the first information indicates numbers, sequence numbers, or frequency resource indexes of the activated frequency resources. Table 1 is still used as an example. The sequence numbers indicated by the first information are 2 and 4. Alternatively, the frequency resource indexes indicated by the first information are 2 and 4. In other words, the activated frequency resources indicated by the first information are the frequency resource 2 and the frequency resource 4 in Table 1, as shown in FIG. 10.

For another example, the first information includes a bit sequence 1, and a value of a first bit in the bit sequence 1 is different from a value of another bit in the bit sequence 1. Bits in the bit sequence 1 one-to-one correspond to frequency resources, and the first bit corresponds to the at least two activated frequency resources indicated by the first information. The resource group 1 in Table 1 is still used as an example. The bit sequence 1 includes four bits, and the four bits one-to-one correspond to the four frequency resources in the resource group 1. If a value of one of the four bits is 1, it indicates that a frequency resource corresponding to the bit is activated. In this case, the bit sequence 1 of the first information may be 0101, and the first bit includes bits whose values are 1, to indicate that the frequency resource 2 and the frequency resource 4 in Table 1 are activated. Alternatively, on the contrary, if a value of one of the four bits is 0, it indicates that a frequency resource corresponding to the bit is activated. In this case, the bit sequence 1 of the first information may be 1010, and the first bit includes bits whose values are 0, to indicate that the frequency resource 2 and the frequency resource 4 in Table 1 are activated, as shown in FIG. 10.

It should be understood that the first information may be implemented in a plurality of manners. In this embodiment of this application, the foregoing two manners are merely used as examples for description, and should not be construed as a limitation on this embodiment of this application.

A frequency resource for transmitting the first information is described as follows: For example, the first information is transmitted by using a primary frequency resource, as shown in FIG. 10. The activated frequency resources indicated by the first information may include a secondary frequency resource, or may include the primary frequency resource and the secondary frequency resource. The plurality of preconfigured frequency resources include the foregoing primary frequency resource and the foregoing secondary frequency resources. In other words, the primary frequency resource is responsible for configuring another secondary frequency resource.

It should be understood that, with evolution of communication technologies, the first information may alternatively be transmitted by using a secondary frequency resource. This is not limited in this embodiment of this application. For example, the first information is transmitted by using one secondary frequency resource. The activated frequency resources indicated by the first information include the secondary frequency resource for transmitting the first information, or the activated frequency resources indicated by the first information do not include the secondary frequency resource for transmitting the first information. For another example, the first information is transmitted by using at least two secondary frequency resources. The first information includes information 1 and information 2. An activated frequency resource indicated by the information 1 includes the frequency resource 1, and the information 1 is transmitted by using the frequency resource 1. An activated frequency resource indicated by the information 2 includes the frequency resource 2, and the information 2 is transmitted by using the frequency resource 2. In other words, information indicating an activated frequency resource is transmitted by using the corresponding frequency resource.

The first information may be carried in different messages. For example, the first information is carried in one of the following: RRC signaling, DCI, or a media access control control element (media access control control element, MAC CE). Certainly, the first information may alternatively be carried in another message. This is not limited in this embodiment of this application.

Optionally, the first information may further indicate an activation time of a frequency resource. For example, the first information indicates that the frequency resource 1 and the frequency resource 3 are activated at the time point 1, the frequency resource 2 is activated at the time point 2, and the time point 1 is different from the time point 2. In this way, the terminal device activates two or more frequency resources at one moment (some moments). For another example, the first information indicates that the frequency resource 1 is activated at the time point 1, the frequency resource 2 is activated at the time point 2, and the time point 1 is different from the time point 2. In this way, the terminal device activates one or more frequency resources at one moment (some moments). In this embodiment of this application, only an example in which the terminal device activates two or more frequency resources at one moment (some moments) is used for description. Compared with the conventional technology in which the terminal device has only one activated frequency resource, this embodiment of this application implements a flexible bandwidth configuration for the terminal device because the access network device can perform data scheduling on more activated frequency resources (namely, at least two frequency resources).

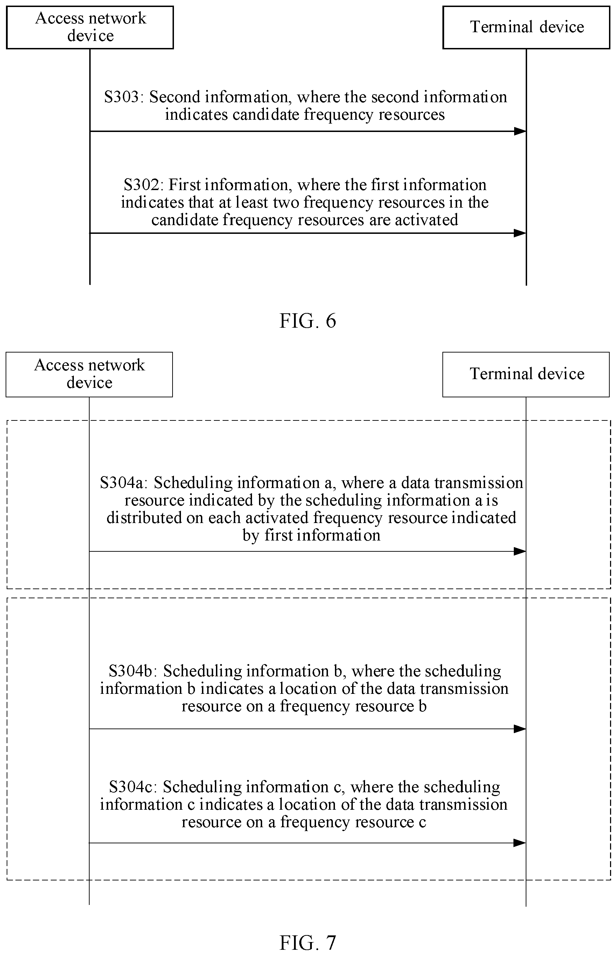

In some embodiments, as shown in FIG. 6, before performing S302, the terminal device may further perform S303:
S303: The access network device sends second information to the terminal device. Correspondingly, the terminal device receives the second information from the access network device.

The second information indicates candidate frequency resources. The candidate frequency resources are determined by the access network device from the plurality of configured frequency resources. The resource group 1 in Table 1 is still used as an example. The resource group 1 is frequency resources configured by the access network device for the terminal device. When there are two candidate frequency resources, the candidate frequency resources include two frequency resources in the resource group 1, for example, {1, 2}, {1, 3}, {1, 4}, {2, 3}, {2, 4}, or {3, 4}. {1, 2} indicates that the candidate frequency resources include the frequency resource 1 and the frequency resource 2. When there are three candidate frequency resources, the candidate frequency resources include three frequency resources in the resource group 1, for example, {1,2, 3}, {1, 2, 4}, {1, 3, 4}, or {2, 3, 4}. {1, 2, 3} indicates that the candidate frequency resources include the frequency resource 1, the frequency resource 2, and the frequency resource 3.

A quantity of candidate frequency resources is determined based on a capability of the terminal device. For example, a maximum quantity of frequency resources supported by the terminal device is 3. In this case, the quantity of candidate frequency resources may be 3. For another example, a maximum quantity of frequency resources supported by the terminal device is 2. In this case, the quantity of candidate frequency resources may be 2. It should be understood that the quantity of candidate frequency resources is less than or equal to the quantity of frequency resources supported by the terminal device. For example, when the maximum quantity of frequency resources supported by the terminal device is 4, the quantity of candidate frequency resources may be 3 or 2. This is not limited in this embodiment of this application.

The candidate frequency resources include the at least two frequency resources indicated by the first information. In other words, the first information indicates that at least two frequency resources in the candidate frequency resources are activated. An example in which the first information indicates that the activated frequency resources are the frequency resource 1 and the frequency resource 2 is used. The candidate frequency resources include at least the frequency resource 1 and the frequency resource 2. Optionally, the candidate frequency resources further include another frequency resource in Table 1. This is not limited in this embodiment of this application.

The second information may be carried in different messages. For example, the second information is carried in one of the following: RRC signaling or a MAC CE. Certainly, the second information may alternatively be carried in another message. This is not limited in this embodiment of this application.

S304: The access network device sends scheduling information to the terminal device. Correspondingly, the terminal device receives the scheduling information from the access network device.

The scheduling information indicates a location of a data transmission resource. For example, the scheduling information indicates a time-frequency resource location of a PDSCH and/or a time-frequency resource location of a PUSCH. The data transmission resource is distributed on an activated frequency resource. Specifically, the data transmission resource may be distributed on one activated frequency resource, or may be distributed on a plurality of activated frequency resources. The resource group 1 in Table 1 is still used as an example. The activated frequency resources include the frequency resource 1 and the frequency resource 2. The data transmission resource is a resource used for a data transmission on the frequency resource 1. Alternatively, the data transmission resource is a resource used for a data transmission on the frequency resource 2. Alternatively, the data transmission resource includes the resource used for the data transmission on the frequency resource 1 and the resource used for the data transmission on the frequency resource 2.

The scheduling information may be physical layer signaling, for example, DCI in different formats (format). Alternatively, the scheduling information may be higher layer signaling, for example, a configured grant information element (configured grant config information element, IE).

The following describes a frequency resource for transmitting the scheduling information.

Case 1: As shown in a 1^{st} block in FIG. 7, S304 includes S304a:
S304a: The access network device sends scheduling information a to the terminal device on a primary frequency resource. Correspondingly, the terminal device receives the scheduling information a from the access network device on the primary frequency resource.

A data transmission resource indicated by the scheduling information a is distributed on each activated frequency resource indicated by the first information. The activated frequency resources indicated by the first information include the primary frequency resource.

The resource group 1 in Table 1 is still used as an example. The primary frequency resource includes the frequency resource 1, and the secondary frequency resources include the frequency resource 2, the frequency resource 3, and the frequency resource 4. The activated frequency resources indicated by the first information include the frequency resource 1 and the frequency resource 2. The scheduling information a is transmitted by using the frequency resource 1. The data transmission resource indicated by the scheduling information a includes the resource used for the data transmission on the frequency resource 1 and the resource used for the data transmission on the frequency resource 2.

In other words, the scheduling information is transmitted by using the primary frequency resource. In this case, the primary frequency resource can schedule scheduling on the secondary frequency resource for a data transmission.

Case 2: As shown in a 2^{nd} block in FIG. 7, S304 includes S304b and S304c.

S304b: The access network device sends scheduling information b to the terminal device on a frequency resource b. Correspondingly, the terminal device receives the scheduling information b from the access network device on the frequency resource b.

The scheduling information b indicates a location of a data transmission resource on the frequency resource b.

The resource group 1 in Table 1 is still used as an example. When the activated frequency resources are the frequency resource 1 and the frequency resource 2, the resource frequency b may be the resource frequency 1, and the scheduling information b is transmitted by using the frequency resource 1. The scheduling information b indicates a location of a resource used for a data transmission on the frequency resource 1.

S304c: The access network device sends scheduling information c to the terminal device on a frequency resource c. Correspondingly, the terminal device receives the scheduling information c from the access network device on the frequency resource c.

The scheduling information c indicates a location of a data transmission resource on the frequency resource c.

The resource group 1 in Table 1 is still used as an example. When the activated frequency resources are the frequency resource 1 and the frequency resource 2, the resource frequency c may be the resource frequency 2, and the scheduling information c is transmitted by using the frequency resource 2. The scheduling information c indicates a location of a resource used for a data transmission on the frequency resource 2.

In other words, each frequency resource transmits scheduling information of the frequency resource, to perform resource scheduling on the frequency resource for a data transmission.

S305: The terminal device performs a data transmission with the access network device on a first frequency resource.

The first frequency resource belongs to the activated frequency resources indicated by the first information. For the first information, refer to the descriptions of S302. The first frequency resource includes a frequency resource on which the data transmission resource is located. For the data transmission resource, refer to the descriptions of S304.

The resource group 1 in Table 1 is still used as an example. When the data transmission resource indicated by the scheduling information is distributed on the frequency resource 1, the first frequency resource includes the frequency resource 1. When the data transmission resource indicated by the scheduling information is distributed on the frequency resource 2, the first frequency resource includes the frequency resource 2. When the data transmission resource indicated by the scheduling information is distributed on the frequency resource 1 and the frequency resource 2, the first frequency resource includes the frequency resource 1 and the frequency resource 2.

For example, when the scheduling information indicates the time-frequency resource location of the PDSCH, the access network device sends the PDSCH on the first frequency resource. Correspondingly, the terminal device receives the PDSCH on the first frequency resource. When the scheduling information indicates the time-frequency resource location of the PUSCH, the terminal device sends the PUSCH on the first frequency resource. Correspondingly, the access network device receives the PUSCH on the first frequency resource.

In some embodiments, as shown in FIG. 3, the communication method 300 in this embodiment of this application further includes the following steps.

S306: The terminal device sends feedback information to the access network device. Correspondingly, the access network device receives the feedback information from the terminal device.

The feedback information indicates a transmission status of the data transmission resource. For descriptions of the data transmission resource, refer to the descriptions of S304. Details are not described herein again.

For example, when the terminal device successfully receives the PDSCH, the feedback information includes acknowledgment information. On the contrary, when the terminal device fails to receive the PDSCH, the feedback information includes negative acknowledgment information.

The following describes a frequency resource for transmitting the feedback information.

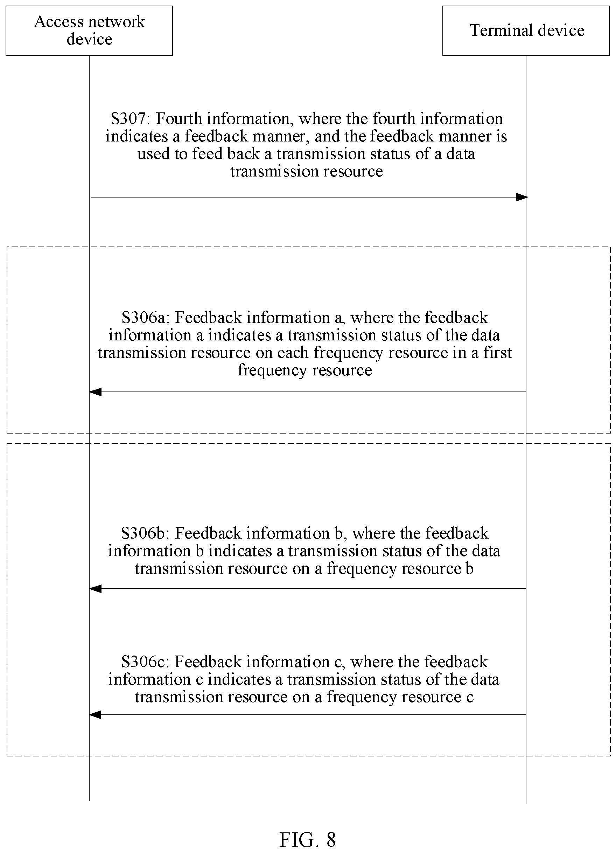

Case 1: As shown in a 1^{st} block in FIG. 8, S306 includes S306a:
S306a: The terminal device sends feedback information a to the access network device on the primary frequency resource. Correspondingly, the access network device receives the feedback information a from the terminal device on the primary frequency resource.

The feedback information a indicates a transmission status of the data transmission resource on each frequency resource in the first frequency resource. The resource group 1 in Table 1 is still used as an example. The primary frequency resource includes the frequency resource 1, and the secondary frequency resource includes the frequency resource 2. The feedback information a is transmitted by using the frequency resource 1. The transmission status indicated by the feedback information a includes a transmission status of the data transmission resource on the frequency resource 1 and a transmission status of the data transmission resource on the frequency resource 2.

Specific implementations of the feedback information a include but is not limited to the following three examples:
Example 1: The feedback information a indicates transmission statuses of the data transmission resource in a same codebook. For example, the first frequency resource includes the frequency resource 1 and the frequency resource 2. The feedback information a indicates the transmission status of the data transmission resource on the frequency resource 1 and the transmission status of the data transmission resource on the frequency resource 2 in a same codebook. For another example, the first frequency resource includes the frequency resource 1, the frequency resource 2, and the frequency resource 3. The feedback information a indicates the transmission status of the data transmission resource on the frequency resource 1, the transmission status of the data transmission resource on the frequency resource 2, and a transmission status of the data transmission resource on the frequency resource 3 in a same codebook.

In other words, the terminal device feeds back transmission statuses on different frequency resources in a single-codebook feedback manner.

Example 2: The feedback information a indicates transmission statuses of data transmission resources on different frequency resources in different codebooks.

For example, the first frequency resource still includes the frequency resource 1 and the frequency resource 2. The feedback information a includes first feedback information and second feedback information. The first feedback information indicates a transmission status of the data transmission resource on the frequency resource 1 in a first codebook, and the second feedback information indicates a transmission status of the data transmission resource on the frequency resource 2 in a second codebook. The first feedback information and the second feedback information are transmitted by using different transmission resources. For example, the first feedback information and the second feedback information are both transmitted on the primary frequency resource, but time domain resources for transmitting the first feedback information and the second feedback information are different.

For another example, the first frequency resource still includes the frequency resource 1, the frequency resource 2, and the frequency resource 3. The feedback information a includes first feedback information, second feedback information, and third feedback information. The first feedback information indicates a transmission status of the data transmission resource on the frequency resource 1 in a first codebook, the second feedback information indicates a transmission status of the data transmission resource on the frequency resource 2 in a second codebook, and the third feedback information indicates a transmission status of the data transmission resource on the frequency resource 3 in a third codebook. The first feedback information, the second feedback information, and the third feedback information are transmitted by using different transmission resources. For example, the first feedback information, the second feedback information, and the third feedback information are all transmitted on the primary frequency resource, but time domain resources for transmitting the first feedback information, the second feedback information, and the third feedback information are different.

In other words, the terminal device feeds back transmission statuses on different frequency resources in a multi-codebook feedback manner, and indicates transmission statuses of data transmission resources on different frequency resources in different codebooks.

Example 3: The feedback information a indicates transmission statuses of the data transmission resource on at least one frequency resource in a same codebook. For example, the first frequency resource still includes the frequency resource 1, the frequency resource 2, and the frequency resource 3. The feedback information a includes fourth feedback information and fifth feedback information. The fourth feedback information indicates a transmission status of the data transmission resource on the frequency resource 1 and a transmission status of the data transmission resource on the frequency resource 2 in a fourth codebook, and the fifth feedback information indicates a transmission status of the data transmission resource on the frequency resource 3 in a fifth codebook. The fourth feedback information and the fifth feedback information are transmitted by using different transmission resources. For example, the fourth feedback information and the fifth feedback information are both transmitted on the primary frequency resource, but time domain resources for transmitting the fourth feedback information and the fifth feedback information are different.

In Example 3, a time difference between data transmissions respectively performed on the frequency resource 1 and the frequency resource 2 is less than a first threshold, a time difference between data transmissions respectively performed on the frequency resource 3 and the frequency resource 2 is greater than or equal to the first threshold, and a time difference between data transmissions respectively performed on the frequency resource 3 and the frequency resource 1 is greater than or equal to the first threshold. A unit of the first threshold may be millisecond, symbol, slot, subframe, or the like. The first threshold may be predefined by a system, or may be configured by the access network device for the terminal device by using signaling. This is not limited in this embodiment of this application.

For example, the first threshold is one slot. The terminal device separately performs a data transmission by using the frequency resource 1, the frequency resource 2, and the frequency resource 3. Specifically, the data transmissions on the frequency resource 1 and the frequency resource 2 are performed on different symbols in a same slot (for example, a slot 1). The data transmission on the frequency resource 3 is performed in a slot 3. In this way, for the data transmissions performed on the three frequency resources (namely, the frequency resource 1, the frequency resource 2, and the frequency resource 3), an interval between the data transmissions performed on the frequency resource 1 and the frequency resource 2 in time domain is relatively small, and does not exceed one slot; an interval between the data transmissions performed on the frequency resource 3 and the frequency resource 2 in time domain is relatively large, and exceeds one slot; and an interval between the data transmissions performed on the frequency resource 3 and the frequency resource 1 in time domain is relatively large, and exceeds one slot. Therefore, the terminal device feeds back different transmission statuses of the data transmission resource by using the fourth feedback information and the fifth feedback information.

In other words, for two frequency resources, if a time difference between data transmissions performed on the two frequency resources is relatively small, for example, less than the first threshold, the feedback information may indicate transmission statuses of the data transmission resource on the two frequency resources in a same codebook, so as to reduce transmission resources. On the contrary, if the time difference between the data transmissions performed on the two frequency resources is relatively large, for example, greater than the first threshold, the feedback information may indicate the transmission statuses of the data transmission resource on the two frequency resources in different codebooks, so as to feed back the transmission statuses to the access network device as soon as possible.

Case 2: As shown in a 2^{nd} block in FIG. 8, S306 includes S306b and S306c.

S306b: The terminal device sends feedback information b to the access network device on the frequency resource b. Correspondingly, the access network device receives the feedback information b from the terminal device on the frequency resource b.

The feedback information b indicates a transmission status of the data transmission resource on the frequency resource b.

The resource group 1 in Table 1 is still used as an example. When the activated frequency resources are the frequency resource 1 and the frequency resource 2, the resource frequency b may be the resource frequency 1, and the feedback information b is transmitted by using the frequency resource 1. The transmission status indicated by the feedback information b includes a transmission status of the data transmission resource on the frequency resource 1.

S306c: The terminal device sends feedback information c to the access network device on the frequency resource c. Correspondingly, the access network device receives the feedback information c from the terminal device on the frequency resource c.

The feedback information c indicates a transmission status of the data transmission resource on the frequency resource c.

The resource group 1 in Table 1 is still used as an example. When the activated frequency resources are the frequency resource 1 and the frequency resource 2, the resource frequency c may be the resource frequency 2, and the feedback information c is transmitted by using the frequency resource 2. The transmission status indicated by the feedback information c includes a transmission status of the data transmission resource on the frequency resource 2.

In other words, each frequency resource transmits feedback information of the frequency resource.

In a case of transmitting the feedback information, in a possible implementation, as shown in FIG. 8, the communication method 800 in this embodiment of this application further includes S307:
S307: The access network device sends fourth information to the terminal device. Correspondingly, the terminal device receives the fourth information from the access network device.

The fourth information indicates a feedback manner, and the feedback manner is used to feed back a transmission status of the data transmission resource.

For example, the fourth information indicates at least one of the following: a quantity of codebooks and a frequency resource for transmitting the feedback information. For example, when the fourth information indicates that there is one codebook, the terminal device may determine that the feedback manner is a single-codebook feedback manner. When the data transmission resources are distributed on two frequency resources, and the fourth information indicates that there are two codebooks, the terminal device may determine to feed back transmission statuses of different frequency resources in different codebooks. When the fourth information indicates that the frequency resource is the primary frequency resource, the terminal device may determine to transmit the feedback information by using the primary frequency resource.

For another example, different feedback manners correspond to different sequence numbers. For example, a value indicated by the fourth information is 00, to indicate the single-codebook feedback manner. Correspondingly, the terminal device performs the manner in Example 1 in S306a. For another example, a value indicated by the fourth information is 01, to indicate a multi-codebook feedback manner and indicate a transmission status of the data transmission resource on one frequency resource in one codebook. Correspondingly, the terminal device performs the manner in Example 2 in S306a, or performs the manners in S306b and S306c. For still another example, a value indicated by the fourth information is 10, to indicate a multi-codebook feedback manner and indicate a transmission status of the data transmission resource on at least one frequency resource in one codebook. Correspondingly, the terminal device performs the manner in Example 2 in S306a, or performs the manner in Example 3 in S306a. For still another example, a value indicated by the fourth information is 11, to indicate a multi-codebook feedback manner and indicate a transmission status in one codebook for a transmission on a corresponding frequency resource. Correspondingly, the terminal device performs the manners in S306b and S306c.

A frequency resource for transmitting the fourth information is described as follows:
Case 1: The fourth information is transmitted by using the primary frequency resource. In other words, the access network device configures the feedback manner by using the primary frequency resource, to indicate a resource location of the feedback information by using the primary frequency resource.
Case 2: The fourth information is transmitted by using the secondary frequency resource. In other words, the access network device configures the feedback manner by using the secondary frequency resource, to indicate a resource location of the feedback information by using the secondary frequency resource.
Case 3: A part of the fourth information is transmitted by using the primary frequency resource, and the other part of the fourth information is transmitted by using the secondary frequency resource. In other words, the access network device configures the feedback manner by combining the primary frequency resource and the secondary frequency resource, to indicate a resource location of the feedback information.

In other words, the access network device indicates the feedback manner for the terminal device, to implement flexible switching of the feedback manner.

In a case of transmitting the feedback information, in another possible implementation, the feedback manner is predefined. For example, the communication system predefines the feedback manner used by the terminal device. Compared with the feedback manner indicated by the access network device by using signaling, the predefined feedback manner can more reduce air interface resource overheads. For example, there is one predefined feedback manner. For example, the feedback manner is predefined as a single-codebook feedback manner. Correspondingly, after performing S305, the terminal device performs the manner in Example 1 in S306a. Certainly, the predefined feedback manner may be another manner. Details are not described herein again. Alternatively, there is a correspondence between a feedback manner and a communication scenario. The terminal device determines the feedback manner based on the communication scenario. For example, in a communication scenario in which two or more frequency resources are used for a data transmission, the terminal device provides the feedback information on the primary frequency resource, as shown in S306a. In a communication scenario in which one frequency resource is used for a data transmission, the terminal device provides the feedback information on a corresponding frequency resource, as shown in S306b or S306c. Alternatively, on the contrary, in a communication scenario in which two or more frequency resources are used for a data transmission, the terminal device provides the feedback information on a corresponding frequency resource, as shown in S306b and S306c. In a communication scenario in which one frequency resource is used for a data transmission, the terminal device provides the feedback information on the primary frequency resource, as shown in S306a.

For another example, when a bandwidth of the primary frequency resource is greater than or equal to a bandwidth threshold 1, it indicates that resources of the primary frequency resource are sufficient, and the terminal device may provide the feedback information on the primary frequency resource, as shown in S306a. When the bandwidth of the primary frequency resource is less than the bandwidth threshold 1, it indicates that the resources of the primary frequency resource are insufficient, and the terminal device may provide the feedback information on the corresponding frequency resource, as shown in S306b and S306c.

For another example, when a bandwidth of the secondary frequency resource is less than a bandwidth threshold 2, it indicates that resources of the secondary frequency resource are insufficient, and the terminal device provides the feedback information on the primary frequency resource, as shown in S306a. When the bandwidth of the secondary frequency resource is greater than or equal to the bandwidth threshold 2, it indicates that the resources of the secondary frequency resource are sufficient, and the terminal device provides the feedback information on the corresponding frequency resource, as shown in S306b and S306c.

It should be understood that the bandwidth threshold 1 and the bandwidth threshold 2 may be the same or may be different. The bandwidth threshold 1 and the bandwidth threshold 2 may be preconfigured values, or may be values indicated by the access network device by using signaling. This is not limited in this embodiment of this application.

In some embodiments, the terminal device may further deactivate a frequency resource. In a possible implementation, as shown in a 1^{st} block in FIG. 9, the communication method 300 in this embodiment of this application further includes the following steps.

S308: When running of a timer expires, the terminal device switches to a default frequency resource.

Effective duration of the timer indicates duration in which a frequency resource in the frequency resources indicated by the first information is in an activated state, and the plurality of frequency resources indicated by the configuration information include the default frequency resource.

For example, there may be one or more timers. Details are as follows:
Manner 1: There is one timer. In other words, effective duration of one timer indicates duration in which a frequency resource in the frequency resources indicated by the first information is in an activated state. For example, if there is an activated frequency resource in the at least two frequency resources indicated by the first information, the timer runs until all frequency resources in the at least two frequency resources indicated by the first information are no longer in an activated state, or running of the timer expires.

An example in which the activated frequency resources include the frequency resource 1 and the frequency resource 2 is still used. If one frequency resource (for example, the frequency resource 1) in the frequency resource 1 and the frequency resource 2 is switched from a deactivated state to an activated state, the timer is started. During running of the timer, one frequency resource (for example, the frequency resource 2) in the frequency resource 1 and the frequency resource 2 is switched from an activated state to a deactivated state, but one frequency resource (that is, the frequency resource 2) is still in an activated state. In this case, the timer keeps running until running of the timer expires, and the terminal device deactivates the frequency resource 2 and falls back to the default frequency resource.

Manner 2: A quantity of timers and a quantity of activated frequency resources are consistent and are in one-to-one correspondence. In other words, effective duration of one timer indicates duration in which a corresponding frequency resource is in an activated state. An example in which the activated frequency resources indicated by the first information include the frequency resource 1 and the frequency resource 2 is still used. A timer 1 indicates duration in which the frequency resource 1 is in an activated state, and a timer 2 indicates duration in which the frequency resource 2 is in an activated state. Correspondingly, that running of a timer expires means that running of each timer expires. It should be understood that timing duration of different timers may be the same or may be different. This is not limited in this embodiment of this application.

An example in which the activated frequency resources include the frequency resource 1 and the frequency resource 2 is still used. If one frequency resource (for example, the frequency resource 1) in the frequency resource 1 and the frequency resource 2 is switched from a deactivated state to an activated state, the timer 1 is started, and the timer 2 is not started. During running of the timer 1, the frequency resource 2 is switched from a deactivated state to an activated state. In this case, the timer 2 is also started. After a period of time, running of the timer 1 expires, and the terminal device deactivates the frequency resource 1. Because running of the timer 2 does not expire, the terminal device does not fall back to the default frequency resource temporarily. Then, after a period of time, running of the timer 2 expires, and the terminal device deactivates the frequency resource 2. Because running of both the timer 1 and the timer 2 expires, the terminal device falls back to the default frequency resource.

It should be noted that, in S308, only an example in which the first information indicates the activated frequency resources is used for description. Certainly, the terminal device may perform beam switching or frequency resource switching. In this way, the activated frequency resources may be distributed in different resource groups. Correspondingly, when running of the timer expires, the terminal device switches from a frequency resource corresponding to the timer that expires to the default frequency resource.

In S308, the duration in which the frequency resource is in an activated state may be represented by using the effective duration of the timer, or may be represented in another timing manner. Correspondingly, the descriptions of S308 may be replaced with the following:
When duration in which a frequency resource in the frequency resources indicated by the first information is in an activated state exceeds first duration, the terminal device switches to the default frequency resource. The first duration is a preset value, for example, duration in which running of the timer expires.

In this embodiment of this application, a rule for switching a frequency resource from a deactivated state to an activated state is described as follows: The terminal device may switch a frequency resource (some frequency resources) from a deactivated state to an activated state based on a preset periodicity. The preset periodicity may be 10 seconds, or may be another value. Alternatively, the terminal device may switch a frequency resource (some frequency resources) from a deactivated state to an activated state according to a preset rule. The preset rule may be predefined, or may be configured by the access network device by using signaling. For example, the preset rule includes: activating the frequency resource 1 in the slot 1, and activating the frequency resource 2 in the slot 2. Certainly, the preset rule may alternatively be in another form. This is not limited in this embodiment of this application.

In an example of deactivating a frequency resource based on a timer, a start moment of the timer may be consistent with a moment of switching the frequency resource to an activated state, as shown Manner 1 and Manner 2 above. The start moment of the timer may also be configured by the access network device. For example, as shown in the 1^{st} block in FIG. 9, the communication method 300 in this embodiment of this application further includes S309:
S309: The access network device sends timer information to the terminal device on the primary frequency resource. Correspondingly, the terminal device receives the timer information from the access network device on the primary frequency resource.

The timer information indicates a triggered timer. For example, the timer information may include a timer name and a trigger indication.

For example, when there is one timer, an example in which the activated frequency resources include the frequency resource 1 and the frequency resource 2 is still used. If one frequency resource (for example, the frequency resource 1) in the frequency resource 1 and the frequency resource 2 is switched from a deactivated state to an activated state, but the terminal device does not receive the timer information, the timer is not started. At a moment, the terminal device performs S309. If the timer information indicates to trigger the timer, the timer is started. During running of the timer, one frequency resource (for example, the frequency resource 2) in the frequency resource 1 and the frequency resource 2 is switched from an activated state to a deactivated state, but one frequency resource (that is, the frequency resource 2) is still in an activated state. In this case, the timer keeps running until running of the timer expires, and the terminal device deactivates the frequency resource 2 and falls back to the default frequency resource.

For another example, when there are a plurality of timers, an example in which the activated frequency resources include the frequency resource 1 and the frequency resource 2 is still used. If the frequency resource 1 and the frequency resource 2 each are switched from a deactivated state to an activated state, but the terminal device does not receive the timer information, neither the timer 1 nor the timer 2 is started. At a moment, the terminal device performs S309. If the timer information indicates to trigger the timer 1, the timer 1 is started. During running of the timer 1, the terminal device performs S309 again. If the timer information indicates to trigger the timer 2, the timer 2 is also started. After a period of time, running of the timer 1 expires, and the terminal device deactivates the frequency resource 1. Because running of the timer 2 does not expire, the terminal device does not fall back to the default frequency resource temporarily. Then, after a period of time, running of the timer 2 expires, and the terminal device deactivates the frequency resource 2. Because running of both the timer 1 and the timer 2 expires, the terminal device falls back to the default frequency resource.

In other words, the access network device indicates a specific timer that the terminal device triggers, so that an access network device side flexibly configures the timer.

In another possible implementation, as shown in a 2^{nd} block in FIG. 9, the communication method 300 in this embodiment of this application further includes S310:
S310: The access network device sends third information to the terminal device. Correspondingly, the terminal device receives the third information from the access network device.

The third information indicates a deactivated frequency resource. For example, when the activated frequency resources are the frequency resources indicated by the first information, the frequency resource indicated by the third information is one or more of the frequency resources indicated by the first information.

An example in which the activated frequency resources indicated by the first information include the frequency resource 1 and the frequency resource 2 is still used. The deactivated frequency resource indicated by the third information may be the frequency resource 1, or may be the frequency resource 2, or may be the frequency resource 1 and the frequency resource 2.

For example, the third information may indicate the deactivated frequency resource by using a bit sequence and a frequency resource index. For details, refer to the descriptions of the first information. Details are not described herein again.

A frequency resource for transmitting the third information is described as follows: For example, the third information is transmitted by using the primary frequency resource. As shown in FIG. 11, the deactivated frequency resource indicated by the third information includes the frequency resource 2 and the frequency resource 4. In other words, the primary frequency resource is responsible for configuring another secondary frequency resource.

It should be understood that the third information may alternatively be transmitted by using the secondary frequency resource. This is not limited in this embodiment of this application. For example, the third information is transmitted by using one secondary frequency resource. The deactivated frequency resource indicated by the third information includes the secondary frequency resource for transmitting the third information.

The third information may be carried in different messages. For example, the third information is carried in one of the following: RRC signaling, DCI, or a MAC CE. Certainly, the third information may alternatively be carried in another message. This is not limited in this embodiment of this application.

In other words, the access network device indicates the deactivated frequency resource, so that the access network device flexibly configures a status of the frequency resource.

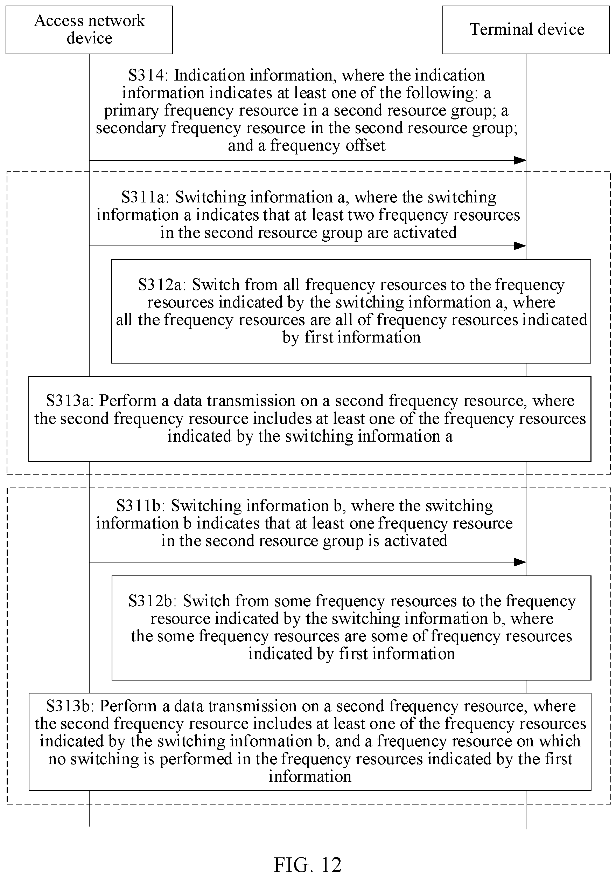

In some embodiments, the terminal device may further perform frequency resource switching. In a possible implementation, as shown in a 1^{st} block in FIG. 12, the communication method 300 in this embodiment of this application further includes the following steps.

S31 1a: The access network device sends switching information a to the terminal device. Correspondingly, the terminal device receives the switching information a from the access network device.

The switching information a indicates that at least two frequency resources in a second resource group are activated.

Table 1 is still used as an example. When the first resource group is the resource group 1, the second resource group may be the resource group 2, the resource group 3, or the resource group 4. The resource group 2 is used as an example. The activated frequency resources indicated by the switching information a may include the frequency resource 6 and the frequency resource 8.

The switching information a indicates the activated frequency resources in a plurality of manners, including but not limited to the following descriptions:
For example, the switching information a indicates numbers, sequence numbers, frequency resource indexes, or the like of the activated frequency resources. For details, refer to the descriptions of the first information. Details are not described herein again.

For another example, the switching information a includes a bit sequence 2, and a value of a second bit in the bit sequence 2 is different from a value of another bit in the bit sequence 2. Bits in the bit sequence 2 one-to-one correspond to frequency resources, and the second bit corresponds to the at least two activated frequency resources indicated by the switching information a. For details, refer to the descriptions of the first information. Details are not described herein again.

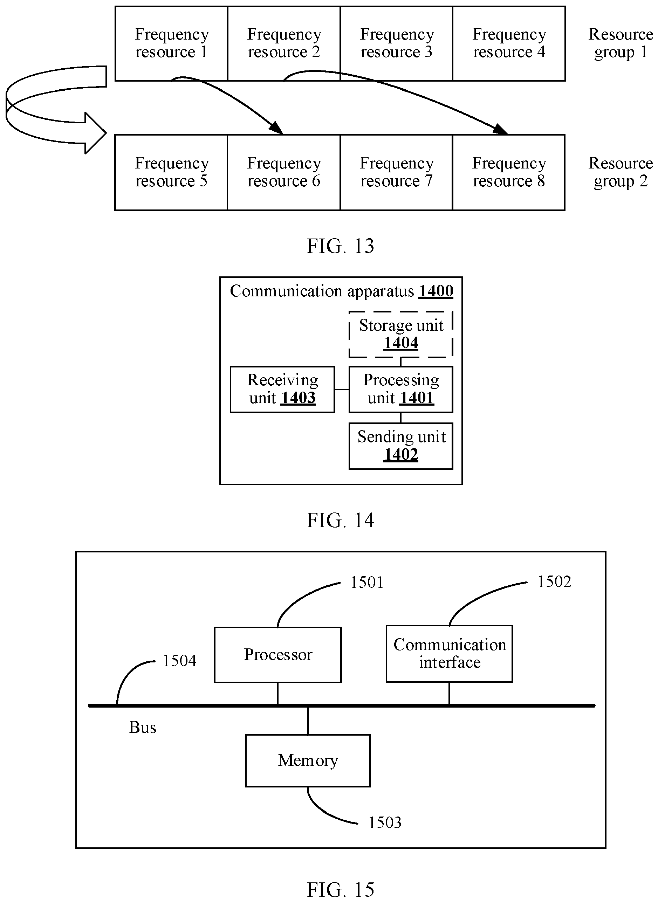

Optionally, the switching information a further indicates at least one of the following:
1: Second index. The second index corresponds to the second resource group. For example, the switching information a further indicates the SSB index 2, to indicate the second resource group. For example, the switching information a further indicates the SSB index 2 by using two bits, and values of the two bits may be 10, to indicate the SSB index 2.
2: Resource group switching. In other words, the switching information a indicates to switch the frequency resources activated by the terminal device from one resource group to another resource group. As shown in FIG. 13, the frequency resources activated by the terminal device are switched from the resource group 1 to the resource group 2.
3: Beam switching. In other words, the switching information a indicates the terminal device to perform beam switching. The frequency resources are a segment of resources on a beam. When performing beam switching, the terminal device performs frequency resource switching.

S312a: The terminal device switches from all frequency resources to the frequency resources indicated by the switching information a.

All the frequency resources are all of the frequency resources indicated by the first information.

An example in which the activated frequency resources indicated by the first information include the frequency resource 1 and the frequency resource 2 is still used. The terminal device deactivates the frequency resource 1 and the frequency resource 2, and activates the frequency resource 6 and the frequency resource 8, as shown in FIG. 13.

In other words, all of the frequency resources activated by the terminal device are switched, that is, are switched from one resource group to another resource group.

S313a: The terminal device performs a data transmission with the access network device on a second frequency resource.

The second frequency resource includes at least one of the frequency resources indicated by the switching information a. The data transmission resource indicated by the scheduling information is distributed on the second frequency resource.

An example in which the activated frequency resources indicated by the switching information a include the frequency resource 6 and the frequency resource 8 is still used. If the data transmission resource indicated by the scheduling information is distributed on the frequency resource 6, the second frequency resource includes the frequency resource 6. If the data transmission resource indicated by the scheduling information is distributed on the frequency resource 8, the second frequency resource includes the frequency resource 8. If the data transmission resource indicated by the scheduling information is distributed on the frequency resource 6 and the frequency resource 8, the second frequency resource includes the frequency resource 6 and the frequency resource 8.

For a specific implementation process of S313a, refer to the descriptions of S305. Details are not described herein again.

In another possible implementation, as shown in a 2^{nd} block in FIG. 12, the communication method 300 in this embodiment of this application further includes the following steps.

S311b: The access network device sends switching information b to the terminal device. Correspondingly, the terminal device receives the switching information b from the access network device.

The switching information b indicates that at least one frequency resource in a second resource group is activated. Table 1 is still used as an example. When the first resource group is the resource group 1, the second resource group may be the resource group 2, the resource group 3, or the resource group 4. The resource group 2 is used as an example. The activated frequency resource indicated by the switching information b may be the frequency resource 6, or may be the frequency resource 8, or may be the frequency resource 6 and the frequency resource 8.

For a specific implementation of the switching information b, refer to the descriptions of S311a. Details are not described herein again.

S312b: The terminal device switches from some frequency resources to the frequency resource indicated by the switching information b.

The some frequency resources are some of the frequency resources indicated by the first information. An example in which the activated frequency resources indicated by the first information include the frequency resource 1 and the frequency resource 2 is still used. The terminal device switches from the frequency resource 1 to the frequency resource 6, and does not switch the frequency resource 2. Alternatively, the terminal device switches from the frequency resource 1 to the frequency resource 8, and does not switch the frequency resource 2. Alternatively, the terminal device switches from the frequency resource 2 to the frequency resource 6, and does not switch the frequency resource 1. Alternatively, the terminal device switches from the frequency resource 2 to the frequency resource 8, and does not switch the frequency resource 1.

For example, the some frequency resources may include the primary frequency resource in the first resource group. For example, the frequency resource 1 is the primary frequency resource. In other words, the primary frequency resource of the terminal device is switched. In addition/Alternatively, the some frequency resources may include the secondary frequency resource in the first resource group. For example, the frequency resource 2 is the secondary frequency resource. In other words, one or more secondary frequency resources of the terminal device are switched.

It can be learned from S312b that some frequency resources in the activated frequency resources are switched. In this way, the activated frequency resources are distributed in two resource groups, for example, some frequency resources in the resource group 1 and some frequency resources in the resource group 2. It should be understood that S312b is described by using only the first information and the switching information b as an example, and the activated frequency resources are distributed in the two resource groups. In addition, the terminal device may perform frequency resource switching for a plurality of times. In this way, the activated frequency resources may be distributed in more or fewer resource groups. This is not limited in this embodiment of this application.

S313b: The terminal device performs a data transmission with the access network device on a second frequency resource.

The data transmission resource indicated by the scheduling information is distributed on the second frequency resource.

For example, the second frequency resource includes at least one of the frequency resources indicated by the switching information b, and a frequency resource on which no switching is performed in the frequency resources indicated by the first information. An example in which the activated frequency resources indicated by the first information include the frequency resource 1 and the frequency resource 2 is still used. When the terminal device switches from the frequency resource 1 to the frequency resource 6, the second frequency resource includes the frequency resource 2 and the frequency resource 6. When the terminal device switches from the frequency resource 1 to the frequency resource 8, the second frequency resource includes the frequency resource 2 and the frequency resource 8. When the terminal device switches from the frequency resource 2 to the frequency resource 6, the second frequency resource includes the frequency resource 1 and the frequency resource 6. When the terminal device switches from the frequency resource 2 to the frequency resource 8, the second frequency resource includes the frequency resource 1 and the frequency resource 8.

In an embodiment of frequency resource switching, as shown in FIG. 12, the communication method 300 in this embodiment of this application further includes the following step.

S314: The access network device sends indication information to the terminal device. Correspondingly, the terminal device receives the indication information from the access network device.

The indication information indicates at least one of the following:
1: Primary frequency resource in the second resource group. For example, the indication information indicates, by using one field, a frequency resource in the second resource group used as the primary frequency resource. For example, the second resource group is implemented as the resource group 2. The primary frequency resource may be the frequency resource 5. The indication information may indicate an index of the frequency resource 5, to indicate the primary frequency resource.
2: Secondary frequency resource in the second resource group. For example, the indication information indicates, by using one or more fields, a frequency resource (some frequency resources) in the second resource group used as a secondary frequency resource. For example, the second resource group is implemented as the resource group 2. The secondary frequency resources may include {5, 6, 7}, {5, 6, 8}, {5, 7, 8}, or {6, 7, 8}. {5, 6, 7} indicates that the secondary frequency resources include the frequency resource 5, the frequency resource 6, and the frequency resource 7. The indication information may indicate indexes of the frequency resources, to indicate the secondary frequency resources.
3: Frequency offset. The frequency offset indicates a frequency offset between the second resource group and the first resource group. A unit of the frequency offset may be Hertz (Hz), RB, or the like. This is not limited in this embodiment of this application. For example, the frequency offset indicates a quantity of RBs that are offset between the second resource group and the first resource group at a reference point. The reference point may be a start RB in a resource group, or may be an end RB in the resource group. This is not limited in this embodiment of this application.

It should be understood that the indication information in S314 and the switching information (for example, the switching information a or the switching information b) may be carried in a same message, or may be carried in different messages. This is not limited in this embodiment of this application.

In an embodiment of frequency resource switching, the switching information a, the switching information b, and the switching information c are used to indicate, in an explicit indication manner, the terminal device to perform frequency resource switching. Certainly, the terminal device may alternatively perform frequency resource switching in an implicit manner. For example, the terminal device performs frequency resource switching according to a preset frequency resource switching rule. The frequency resource switching rule indicates an activation moment and a deactivation moment of a frequency resource. For example, an activation moment of the frequency resource 1 is a start boundary of the slot 1, and a deactivation moment is an end boundary of the slot 3. An activation moment of the frequency resource 2 is a start boundary of the slot 2, and a deactivation moment is an end boundary of the slot 4. An activation moment of the frequency resource 6 is a start boundary of the slot 5, and a deactivation moment is an end boundary of the slot 6. In this way, after the slot 4, the terminal device deactivates the frequency resource 2 and activates the frequency resource 6, that is, the activated frequency resource is switched from the frequency resource 2 to the frequency resource 6. The foregoing slot may alternatively be replaced with another time unit, for example, a subframe or a frame. The start boundary and the end boundary may alternatively be replaced with other reference points, for example, intermediate points. This is not limited in this embodiment of this application.

It should be noted that, in this embodiment of this application, the frequency resource may include a BWP. Correspondingly, the default frequency resource may include a default BWP. The primary frequency resource may include a primary BWP. The secondary frequency resource may include a secondary BWP. The frequency resource switching may include BWP switching. The activated frequency resource may include an activated BWP. The deactivated frequency resource may include a deactivated BWP.

The foregoing mainly describes the solutions provided in embodiments of this application from a perspective of interaction between network elements. Correspondingly, an embodiment of this application further provides a communication apparatus. The communication apparatus may be the network element in the foregoing method embodiment, an apparatus including the foregoing network element, or a component that can be used in the network element. It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application may be implemented by using hardware or a combination of hardware and computer software. Whether a function is performed by using hardware or hardware driven by computer software depends on particular applications and design constraints of the technical solutions. A person skilled in the art may use different methods to implement the described functions for each particular application, but it should not be considered that the implementation goes beyond the scope of this application.

For example, FIG. 14 is a schematic diagram of a structure of a communication apparatus 1400. The communication apparatus 1400 includes a processing unit 1401, a sending unit 1402, and a receiving unit 1403.

In a possible example, the communication apparatus 1400 is a terminal device. The processing unit 1401 is configured to support the terminal device in performing a processing operation that needs to be performed on a terminal device side. The sending unit 1402 is configured to support the terminal device in performing S306 in FIG. 3, and/or another receiving operation that needs to be performed by the terminal device in this embodiment of this application. The receiving unit 1403 is configured to support the terminal device in performing S301, S302, S304, and S305 in FIG. 3, and/or another sending operation that needs to be performed by the terminal device in this embodiment of this application.

In another possible example, an example in which the communication apparatus 1400 is an access network device is used, and the processing unit 1401 is configured to support the access network device in performing a processing operation that needs to be performed on an access network device side. The receiving unit 1403 is configured to support the access network device in performing S306 in FIG. 3, and/or another receiving operation that needs to be performed by the access network device in this embodiment of this application. The sending unit 1402 is configured to support the access network device in performing S301, S302, S304, and S305 in FIG. 3, and/or another sending operation that needs to be performed by the access network device in this embodiment of this application.

Optionally, the communication apparatus 1400 may further include a storage unit 1404, configured to store program code and data of the communication apparatus. The data may include but is not limited to original data, intermediate data, or the like.

The processing unit 1401 may be a processor or a controller, for example, may be a CPU, a general-purpose processor, an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The sending unit 1402 may be a communication interface, a transmitter, a transmitter circuit, or the like. The communication interface is a general term. During specific implementation, the communication interface may include a plurality of interfaces, for example, may include an interface between terminal devices (for example, a first terminal device and a second terminal device) and/or another interface.

The receiving unit 1403 may be a communication interface, a receiver, a receiver circuit, or the like. The communication interface is a general term. During specific implementation, the communication interface may include a plurality of interfaces, for example, may include an interface between a terminal device and an access network device and/or another interface.

The sending unit 1402 and the receiving unit 1403 may be physically or logically implemented as a same unit.

The storage unit 1404 may be a memory.

When the processing unit 1401 is a processor, the sending unit 1402 and the receiving unit 1403 are communication interfaces, and the storage unit 1404 is a memory, the communication apparatus in this embodiment of this application may be shown in FIG. 15.

Refer to FIG. 15. The communication apparatus includes a processor 1501, a communication interface 1502, and a memory 1503. Optionally, the communication apparatus may further include a bus 1504. The communication interface 1502, the processor 1501, and the memory 1503 may be connected to each other through the bus 1504. The bus 1504 may be a peripheral component interconnect (peripheral component interconnect, PCI) bus, an extended industry standard architecture (extended industry standard architecture, EISA) bus, or the like. The bus 1504 may be classified into an address bus, a data bus, a control bus, and the like. For ease of representation, only one thick line is used to represent the bus in FIG. 15, but this does not mean that there is only one bus or only one type of bus.

Optionally, an embodiment of this application further provides a computer program product carrying computer instructions. When the computer instructions are run on a computer, the computer is enabled to perform the method described in the foregoing embodiment.

Optionally, an embodiment of this application further provides a computer-readable storage medium. The computer-readable storage medium stores computer instructions, and when the computer instructions are run on a computer, the computer is enabled to perform the method described in the foregoing embodiment.

Optionally, an embodiment of this application further provides a chip, including a processing circuit and a transceiver circuit. The processing circuit and the transceiver circuit are configured to implement the method described in the foregoing embodiment. The processing circuit is configured to perform a processing action in a corresponding method, and the transceiver circuit is configured to perform a receiving/sending action in the corresponding method.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

In several embodiments provided in this application, it should be understood that the disclosed system, apparatus, and method may be implemented in other manners. For example, the apparatus embodiment described above is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic or other forms.

The units described as separate parts may or may not be physically separate, and parts displayed as units may or may not be physical units, that is, may be located in one place, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions of this application essentially or the part making contribution may be implemented in a form of a software product. The computer software product is stored in a readable storage medium, such as a floppy disk, a hard disk, or an optical disc of a computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, comprising:
receiving, by a first communication apparatus, first information from an access network device, wherein the first information indicates that at least two frequency resources in a plurality of frequency resources are activated, and the plurality of frequency resources are preconfigured; and
performing, by the first communication apparatus, a data transmission with the access network device on a first frequency resource, wherein the at least two frequency resources indicated by the first information comprise the first frequency resource.

2. The method according to claim 1, wherein the method further comprises:
receiving, by the first communication apparatus, configuration information from the access network device by using a first beam, wherein the first beam corresponds to a first resource group, the plurality of frequency resources belong to the first resource group, and the configuration information indicates a frequency resource configuration of the first resource group.

3. The method according to claim 1, wherein the method further comprises:
receiving, by the first communication apparatus, configuration information from the access network device, wherein the configuration information indicates a first index, the first index corresponds to a first resource group, the plurality of frequency resources belong to the first resource group, and the configuration information indicates a frequency resource configuration of the first resource group.

4. The method according to claim 2 or 3, wherein the first index comprises one of the following: an index of a synchronization signal block SSB or an index of a channel state information-reference signal CSI-RS.

5. The method according to any one of claims 1 to 4, wherein the first information is carried in one of the following: radio resource control RRC signaling, downlink control information DCI, or a media access control control element MAC CE.

6. The method according to any one of claims 1 to 5, wherein the method further comprises:
receiving, by the first communication apparatus, second information from the access network device, wherein
the second information indicates candidate frequency resources, a quantity of candidate frequency resources is determined based on a capability of the first communication apparatus, and the first information indicates that at least two frequency resources in the candidate frequency resources are activated.

7. The method according to any one of claims 1 to 6, wherein the method further comprises:
when running of a timer expires, switching, by the first communication apparatus, to a default frequency resource, wherein
effective duration of the timer indicates duration in which a frequency resource in the frequency resources indicated by the first information is in an activated state, and the plurality of frequency resources comprise the default frequency resource.

8. The method according to claim 7, wherein there is one timer; or
a quantity of timers and a quantity of frequency resources indicated by the first information are consistent and are in one-to-one correspondence, effective duration of each timer indicates duration in which a corresponding frequency resource is in an activated state, and that running of a timer expires comprises: running of each timer expires.

9. The method according to claim 7 or 8, wherein the method further comprises:
receiving, by the first communication apparatus, timer information from the access network device on a primary frequency resource, wherein the timer information indicates to trigger the timer, and the frequency resources indicated by the first information comprise the primary frequency resource.

10. The method according to any one of claims 1 to 6, wherein the method further comprises:
receiving, by the first communication apparatus, third information from the access network device, wherein
the third information indicates a deactivated frequency resource, and the frequency resource indicated by the third information is at least one of the frequency resources indicated by the first information.

11. The method according to any one of claims 1 to 10, wherein the method further comprises:
receiving, by the first communication apparatus, switching information from the access network device, wherein the switching information indicates that at least two frequency resources in a second resource group are activated; and
switching, by the first communication apparatus, from all frequency resources to the frequency resources indicated by the switching information, wherein all the frequency resources are all of the frequency resources indicated by the first information.

12. The method according to claim 11, wherein the switching information further indicates at least one of the following: resource group switching or beam switching.

13. The method according to any one of claims 1 to 10, wherein the method further comprises:
receiving, by the first communication apparatus, switching information from the access network device, wherein the switching information indicates that at least one frequency resource in a second resource group is activated; and
switching, by the first communication apparatus, from some frequency resources to the frequency resource indicated by the switching information, wherein the some frequency resources are some of the frequency resources indicated by the first information.

14. The method according to claim 13, wherein the some frequency resources comprise the primary frequency resource and/or a secondary frequency resource.

15. The method according to any one of claims 11 to 14, wherein the method further comprises:
receiving, by the first communication apparatus, indication information from the access network device, wherein the indication information indicates at least one of the following:
a primary frequency resource in the second resource group;
a secondary frequency resource in the second resource group; and
a frequency offset, wherein the frequency offset indicates a frequency offset between the second resource group and the first resource group, and the first resource group comprises the at least two resources indicated by the first information.

16. The method according to any one of claims 11 to 15, wherein the switching information indicates a second index, and the second index corresponds to the second resource group.

17. The method according to any one of claims 1 to 10, wherein the first information is transmitted by using the primary frequency resource; and
the plurality of frequency resources comprise the primary frequency resource, and the at least two frequency resources indicated by the first information belong to secondary frequency resources.

18. The method according to claim 17, wherein the first information comprises a bit sequence, and a value of a first bit in the bit sequence is different from a value of another bit in the bit sequence; and
bits in the bit sequence one-to-one correspond to frequency resources in the plurality of frequency resources, and the first bit corresponds to the at least two frequency resources indicated by the first information.

19. The method according to claim 17, wherein the first information comprises frequency resource indexes, and the frequency resource indexes identify the at least two frequency resources indicated by the first information.

20. The method according to any one of claims 1 to 10, wherein the method further comprises:
receiving, by the first communication apparatus, scheduling information from the access network device on the primary frequency resource, wherein
the scheduling information indicates a location of a data transmission resource, the data transmission resource is distributed on each frequency resource indicated by the first information, and the frequency resources indicated by the first information comprise the primary frequency resource.

21. The method according to claim 20, wherein the method further comprises:
sending, by the first communication apparatus, feedback information to the access network device on the primary frequency resource, wherein
the feedback information indicates transmission statuses of the data transmission resource in a same codebook; or
the feedback information comprises first feedback information and second feedback information, the first feedback information indicates a transmission status of the data transmission resource on a third frequency resource in a first codebook, the second feedback information indicates a transmission status of the data transmission resource on a fourth frequency resource in a second codebook, the first feedback information and the second feedback information are transmitted by using different transmission resources, and the first frequency resource comprises the third frequency resource and the fourth frequency resource.

22. The method according to claim 21, wherein the first feedback information further indicates a transmission status of the data transmission resource on a fifth frequency resource in the first codebook;
the first frequency resource further comprises the fifth frequency resource; and
a time difference between data transmissions respectively performed on the fifth frequency resource and the third frequency resource is less than a first threshold, a time difference between data transmissions respectively performed on the fourth frequency resource and the third frequency resource is greater than or equal to the first threshold, and a time difference between data transmissions respectively performed on the fourth frequency resource and the fifth frequency resource is greater than or equal to the first threshold.

23. The method according to any one of claims 1 to 10, wherein the method further comprises:
receiving, by the first communication apparatus, first scheduling information from the access network device on a third frequency resource, wherein the first scheduling information indicates a location of a data transmission resource on the third frequency resource, and the first frequency resource comprises the third frequency resource; and
receiving, by the first communication apparatus, second scheduling information from the access network device on a fourth frequency resource, wherein the second scheduling information indicates a location of the data transmission resource on the fourth frequency resource, and the first frequency resource comprises the fourth frequency resource.

24. The method according to claim 23, wherein the method further comprises:
sending, by the first communication apparatus, first feedback information to the access network device on the third frequency resource, wherein the first feedback information indicates a transmission status of the data transmission resource on the third frequency resource; and
sending, by the first communication apparatus, second feedback information to the access network device on the fourth frequency resource, wherein the second feedback information indicates a transmission status of the data transmission resource on the fourth frequency resource.

25. The method according to any one of claims 20 to 24, wherein the method further comprises:
receiving, by the first communication apparatus, fourth information from the access network device, wherein the fourth information indicates a feedback manner, and the feedback manner is used to feed back a transmission status of the data transmission resource.

26. A communication method, comprising:
sending, by a second communication apparatus, first information to a terminal device, wherein the first information indicates that at least two frequency resources in a plurality of frequency resources are activated, and the plurality of frequency resources are preconfigured; and
performing, by the second communication apparatus, a data transmission with the terminal device on a first frequency resource, wherein the at least two frequency resources indicated by the first information comprise the first frequency resource.

27. The method according to claim 26, wherein the method further comprises:
sending, by the second communication apparatus, configuration information to the terminal device by using a first beam, wherein the first beam corresponds to a first resource group, the plurality of frequency resources belong to the first resource group, and the configuration information indicates a frequency resource configuration of the first resource group.

28. The method according to claim 26, wherein the method further comprises:
sending, by the second communication apparatus, configuration information to the terminal device, wherein the configuration information indicates a first index, the first index corresponds to a first resource group, the plurality of frequency resources belong to the first resource group, and the configuration information indicates a frequency resource configuration of the first resource group.

29. The method according to claim 27 or 28, wherein the first index comprises one of the following: an index of a synchronization signal block SSB or an index of a channel state information-reference signal CSI-RS.

30. The method according to any one of claims 26 to 29, wherein the first information is carried in one of the following: radio resource control RRC signaling, downlink control information DCI, or a media access control control element MAC CE.

31. The method according to any one of claims 26 to 30, wherein the method further comprises:
sending, by the second communication apparatus, second information to the terminal device, wherein
the second information indicates candidate frequency resources, a quantity of candidate frequency resources is determined based on a capability of the terminal device, and the first information indicates that at least two frequency resources in the candidate frequency resources are activated.

32. The method according to any one of claims 26 to 31, wherein the method further comprises:
sending, by the second communication apparatus, timer information to the terminal device on a primary frequency resource, wherein the timer information indicates to trigger a timer, the frequency resources indicated by the first information comprise the primary frequency resource, and effective duration of the timer indicates duration in which a frequency resource in the frequency resources indicated by the first information is in an activated state.

33. The method according to claim 32, wherein there is one timer; or
a quantity of timers and a quantity of frequency resources indicated by the first information are consistent and are in one-to-one correspondence, effective duration of each timer indicates duration in which a corresponding frequency resource is in an activated state, and that running of a timer expires comprises: running of each timer expires.

34. The method according to any one of claims 26 to 31, wherein the method further comprises:
sending, by the second communication apparatus, third information to the terminal device, wherein
the third information indicates a deactivated frequency resource, and the frequency resource indicated by the third information is at least one of the frequency resources indicated by the first information.

35. The method according to any one of claims 26 to 34, wherein the method further comprises:
sending, by the second communication apparatus, switching information to the terminal device, wherein the switching information indicates that at least two frequency resources in a second resource group are activated.

36. The method according to claim 26, wherein the switching information further indicates at least one of the following: resource group switching or beam switching.

37. The method according to any one of claims 26 to 34, wherein the method further comprises:
sending, by the second communication apparatus, switching information to the terminal device, wherein the switching information indicates that at least one frequency resource in a second resource group is activated.

38. The method according to claim 37, wherein the some frequency resources comprise the primary frequency resource and/or a secondary frequency resource.

39. The method according to any one of claims 35 to 38, wherein the method further comprises:
sending, by the second communication apparatus, indication information to the terminal device, wherein the indication information indicates at least one of the following:
a primary frequency resource in the second resource group;
a secondary frequency resource in the second resource group; and
a frequency offset, wherein the frequency offset indicates a frequency offset between the second resource group and the first resource group, and the first resource group comprises the at least two resources indicated by the first information.

40. The method according to any one of claims 35 to 39, wherein the switching information indicates a second index, and the second index corresponds to the second resource group.

41. The method according to any one of claims 26 to 34, wherein the first information is transmitted by using the primary frequency resource; and
the plurality of frequency resources comprise the primary frequency resource, and the at least two frequency resources indicated by the first information belong to secondary frequency resources.

42. The method according to claim 41, wherein the first information comprises a bit sequence, and a value of a first bit in the bit sequence is different from a value of another bit in the bit sequence; and
bits in the bit sequence one-to-one correspond to frequency resources in the plurality of frequency resources, and the first bit corresponds to the at least two frequency resources indicated by the first information.

43. The method according to claim 41, wherein the first information comprises frequency resource indexes, and the frequency resource indexes identify the at least two frequency resources indicated by the first information.

44. The method according to any one of claims 26 to 34, wherein the method further comprises:
sending, by the second communication apparatus, scheduling information to the terminal device on the primary frequency resource, wherein
the scheduling information indicates a location of a data transmission resource, the data transmission resource is distributed on each frequency resource indicated by the first information, and the frequency resources indicated by the first information comprise the primary frequency resource.

45. The method according to claim 44, wherein the method further comprises:
receiving, by the second communication apparatus, feedback information from the terminal device on the primary frequency resource, wherein
the feedback information indicates transmission statuses of the data transmission resource in a same codebook; or
the feedback information comprises first feedback information and second feedback information, the first feedback information indicates a transmission status of the data transmission resource on a third frequency resource in a first codebook, the second feedback information indicates a transmission status of the data transmission resource on a fourth frequency resource in a second codebook, the first feedback information and the second feedback information are transmitted by using different transmission resources, and the first frequency resource comprises the third frequency resource and the fourth frequency resource.

46. The method according to claim 45, wherein the first feedback information further indicates a transmission status of the data transmission resource on a fifth frequency resource in the first codebook;
the first frequency resource further comprises the fifth frequency resource; and
a time difference between data transmissions respectively performed on the fifth frequency resource and the third frequency resource is less than a first threshold, a time difference between data transmissions respectively performed on the fourth frequency resource and the third frequency resource is greater than or equal to the first threshold, and a time difference between data transmissions respectively performed on the fourth frequency resource and the fifth frequency resource is greater than or equal to the first threshold.

47. The method according to any one of claims 26 to 34, wherein the method further comprises:
sending, by the second communication apparatus, first scheduling information to the terminal device on a third frequency resource, wherein the first scheduling information indicates a location of a data transmission resource on the third frequency resource, and the first frequency resource comprises the third frequency resource; and
sending, by the second communication apparatus, second scheduling information to the terminal device on a fourth frequency resource, wherein the second scheduling information indicates a location of the data transmission resource on the fourth frequency resource, and the first frequency resource comprises the fourth frequency resource.

48. The method according to claim 47, wherein the method further comprises:
receiving, by the second communication apparatus, first feedback information from the terminal device on the third frequency resource, wherein the first feedback information indicates a transmission status of the data transmission resource on the third frequency resource; and
receiving, by the second communication apparatus, second feedback information from the terminal device on the fourth frequency resource, wherein the second feedback information indicates a transmission status of the data transmission resource on the fourth frequency resource.

49. The method according to any one of claims 44 to 48, wherein the method further comprises:
sending, by the second communication apparatus, fourth information to the terminal device, wherein the fourth information indicates a feedback manner, and the feedback manner is used to feed back a transmission status of the data transmission resource.

50. A communication apparatus, comprising units configured to perform the steps according to any one of claims 1 to 25, or units configured to perform the steps according to any one of claims 26 to 49.

51. A communication apparatus, comprising a processor and a memory, wherein the processor is coupled to the memory, the memory stores program instructions, and when the program instructions stored in the memory are executed by the processor, the method according to any one of claims 1 to 25 is implemented, or the method according to any one of claims 26 to 49 is implemented.

52. A chip, wherein the chip comprises a logic circuit and an input/output interface, the input/output interface is configured to communicate with a module outside the chip, and the logic circuit is configured to run a computer program or instructions, to implement the method according to any one of claims 1 to 25, or implement the method according to any one of claims 26 to 49.

53. A computer-readable storage medium, wherein the computer-readable storage medium stores a program, and when the program is invoked by a processor, the method according to any one of claims 1 to 25 is performed, or the method according to any one of claims 26 to 49 is performed.

54. A communication system, comprising a terminal device and a network device, wherein the terminal device is configured to perform the method according to any one of claims 1 to 25, and the access network device is configured to perform the method according to any one of claims 26 to 49.
